# EUROPEAN PATENT APPLICATION

(11) **EP 4 645 983 A1**
(43) Date of publication of application: **05.11.2025**
(21) Application number: 24756034.5
(22) Date of filing: 02.02.2024
(51) Int. Cl.: H04W 72/0446, H04W 72/044, H04L 5/00

(54) **SIGNAL TRANSMISSION METHOD AND COMMUNICATION APPARATUS**

(30) Priority: 17.02.2023 CN 202310172159
(71) Applicant: Huawei Technologies Co., Ltd., Shenzhen, Guangdong 518129 (CN)
(72) Inventor: SHEN, Zhongyi, Shenzhen, Guangdong 518129 (CN); LEI, Chunyang, Shenzhen, Guangdong 518129 (CN); LI, Hong, Shenzhen, Guangdong 518129 (CN); HAN, Jing, Shenzhen, Guangdong 518129 (CN)
(74) Representative: Grünecker Patent- und Rechtsanwälte PartG mbB
(86) International application number: PCT/CN2024/075537
(87) International publication number: WO 2024/169660

(57) **Abstract**

This application provides a signal transmission method and a communication apparatus. The method includes: indicating a beam type used for a terminal device to receive a first downlink signal and/or a second downlink signal, where a time domain resource of the first downlink signal overlaps a time domain resource of the second downlink signal, the beam type includes a first beam type or a second beam type, the first beam type indicates: a first beam used when the terminal device can simultaneously receive a first reference signal and a second reference signal, and/or a second beam used when the terminal device can simultaneously receive the first reference signal and the second reference signal, and the second beam type indicates: a beam used when the terminal device can receive the first reference signal, and/or a beam used when the terminal device can receive the second reference signal. According to the method provided in this application, a network device indicates the terminal device to simultaneously receive a plurality of signals, thereby improving a data throughput and improving performance of the terminal device.

## Description

This application claims priority to Chinese Patent Application No. 2023101721590, filed with the China National Intellectual Property Administration on February 17, 2023 and entitled "SIGNAL TRANSMISSION METHOD AND COMMUNICATION APPARATUS", which is incorporated herein by reference in its entirety.

### TECHNICAL FIELD

This application relates to the field of communication technologies, and more specifically, to a signal transmission method and a communication apparatus.

### BACKGROUND

Beam (beam)-based communication can bring a higher antenna gain. Particularly, in a high-frequency communication environment, beam-based communication can overcome fast attenuation of a high-frequency signal. A network device and a terminal device may obtain a pairing relationship between a transmit beam and a receive beam through beam training, and the terminal device may determine the receive beam based on the pairing relationship and a transmission configuration indicator (transmission configuration indication, TCI) state dynamically indicated by the network device.

The terminal device receives a signal based on the TCI indicated by the network device. However, a plurality of transmission reception points (transmission reception point, TRP) of the network device and a plurality of panels of the terminal device perform signal transmission, and the terminal device corresponds to a plurality of beam selection policies. In this case, how the terminal device performs beam selection to establish a consistent understanding with the network device, so that the terminal device can simultaneously receive, in different directions, downlink signals sent by the plurality of TRPs is currently an urgent problem of concern.

### SUMMARY

This application provides a signal transmission method and a communication apparatus. A terminal device simultaneously receives a plurality of signals from different directions based on indication information of a network device, to improve a data receiving throughput of the terminal device and improve performance of the terminal device.

According to a first aspect, a signal transmission method is provided. The method provided in the first aspect may be performed by a network device, or may be performed by a chip configured in a network device. This is not limited in this application.

Specifically, the method includes: indicating a beam type used for a terminal device to receive a first downlink signal and/or a second downlink signal, where a time domain resource of the first downlink signal overlaps a time domain resource of the second downlink signal, the beam type includes a first beam type or a second beam type, the first beam type indicates: a first beam used when the terminal device can simultaneously receive a first reference signal and a second reference signal, and/or a second beam used when the terminal device can simultaneously receive the first reference signal and the second reference signal, and the second beam type indicates: a beam used when the terminal device can receive the first reference signal, and/or a beam used when the terminal device can receive the second reference signal.

The first downlink signal and the first reference signal have a QCL relationship. The second downlink signal and the second reference signal have a QCL relationship. A receive beam for the first downlink signal is different from a receive beam for the second downlink signal.

According to the signal transmission method provided in the first aspect, when the time domain resource of the first downlink signal overlaps the time domain resource of the second downlink signal, the terminal device does not know which beam can be used to receive the first downlink signal, or the terminal device does not know which beam can be used to receive the second downlink signal. The network device may indicate a beam type used for the terminal device to receive the first downlink signal, and/or the network device may indicate a beam type used for the terminal device to receive the second downlink signal. In this manner, the network device indicates the terminal device to use which beam for receiving, so that a consistent understanding can be established between the network device and the terminal device. When the network device indicates the terminal device to simultaneously receive signals sent by a plurality of TRPs, the terminal device simultaneously receives two downlink signals based on the indication, thereby improving a signal receiving throughput of the terminal device and improving performance of the terminal device.

In other words, the first downlink signal is used as an example. When the network device indicates a same TCI indication (for example, QCL-Type-SSB 0) of the first downlink signal, the terminal device has an optimal receive beam for the reference signal. In addition, for the reference signal, there is a receive beam that can be used to simultaneously receive the reference signal and another downlink signal, and the two beams may be located on different panels of the terminal device. Therefore, for the same TCI indication, the terminal device selects different beam types when receiving the first downlink signal.

It should be understood that the first downlink signal may be sent by a first network device, the second downlink signal may be sent by a second network device, the first reference signal may be sent by the first network device, and the second reference signal may be sent by the second network device. Alternatively, the first downlink signal and the second downlink signal may be signals sent by a same network device in two directions. This is not limited in this embodiment of this application.

Optionally, the first network device may be a first TRP, and the second network device may be a second TRP.

In some embodiments, the first downlink signal may be a first PDSCH or a first CSI-RS, and the second downlink signal may be a second PDSCH or a second CSI-RS.

In a possible implementation of the first aspect, the first downlink signal is the first PDSCH, the second downlink signal is the second PDSCH, and the method further includes: determining that sending time of the first PDSCH and sending time of second DCI meet a first condition, where first DCI is used to schedule the first PDSCH, and the second DCI is used to schedule the second PDSCH. In this implementation, when the sending time of the first PDSCH and the sending time of the second DCI meet the first condition, it indicates that the first PDSCH and the second DCI are close enough, and the terminal device can simultaneously receive the first PDSCH and the second PDSCH only based on the indication of the network device.

Alternatively, the first condition is that an interval between the sending time of the first PDSCH and the sending time of the second DCI is less than, or less than or equal to a preset threshold.

It should be understood that the preset threshold may be set based on a specific situation. This is not limited in this embodiment of this application.

Optionally, the sending time of the second DCI is earlier than the sending time of the first PDSCH.

In a possible implementation of the first aspect, the first downlink signal is a first channel state information-reference signal CSI-RS, and/or the second downlink signal is a second CSI-RS, and the method further includes: indicating the terminal device to measure a reference signal, where the reference signal includes the first reference signal and/or the second reference signal; and the network device indicates a reporting type of the reference signal to the terminal device, where the reporting type includes a first reporting type and a second reporting type.

The first reporting type indicates: The terminal device reports measurement results obtained when the first reference signal and the second reference signal can be simultaneously received, and/or reports an identifier of the first reference signal and an identifier of the second reference signal, and the second reporting type indicates: the terminal device reports a measurement result obtained when the first reference signal can be received and/or the identifier of the first reference signal, or reports a measurement result obtained when the second reference signal can be received and/or the identifier of the second reference signal.

In a possible implementation of the first aspect, that the network device indicates the beam type used for the terminal device to receive the first downlink signal and/or the second downlink signal includes: sending a media access control control element MAC CE to the terminal device, where the MAC CE indicates the beam type used for the terminal device to receive the first downlink signal and/or the second downlink signal. In this implementation, the network device may dynamically and explicitly indicate, by using the MAC CE signaling, the beam type used for receiving the first downlink signal, and the terminal device may explicitly determine, based on the indication of the network device, the beam type used for receiving the first downlink signal. Although additional signaling is introduced, signaling overheads are not high.

In a possible implementation of the first aspect, when the first downlink signal is the first PDSCH, and/or the second downlink signal is the second PDSCH, and that the network device indicates the beam type used for the terminal device to receive the first downlink signal and/or the second downlink signal includes: sending the first DCI to the terminal device, where the first DCI indicates the beam type used for the terminal device to receive the first downlink signal; and/or sending the second DCI to the terminal device, where the second DCI indicates the beam type used for the terminal device to receive the second downlink signal. In this implementation, the network device may explicitly indicate, by using the DCI, the beam type used for receiving the first downlink signal, and the terminal device may explicitly determine, based on the indication of the network device, the beam type used for receiving the first downlink signal. Compared with an indication manner by using MAC CE signaling, in this manner, because each PDSCH may be separately indicated by using the DCI, control in this manner is more flexible, and DCI decoding at the physical layer is faster. However, because indication needs to be performed in each piece of DCI, signaling overheads are slightly higher.

In a possible implementation of the first aspect, the first downlink signal is the first PDSCH, and/or the second downlink signal is the second PDSCH, and that the network device indicates the beam type used for the terminal device to receive the first downlink signal and/or the second downlink signal includes: configuring a first transmission configuration indicator TCI of the terminal device, where the first TCI indicates the beam type used for the terminal device to receive the first downlink signal; and/or configuring a second TCI of the terminal device, where the second TCI indicates the beam type used for the terminal device to receive the second downlink signal. In this implementation, two TCIs need to be configured in RRC configuration, and a quantity of configured TCIs is doubled compared with the foregoing two manners. Therefore, overheads in the RRC configuration are relatively high. For example, for QCL-Typed-SSB 0, two TCIs need to be configured. One TCI corresponds to a beam type capable of simultaneously receiving an SSB 0, and the other TCI corresponds to an optimal beam type used for receiving the SSB 0.

According to a second aspect, a signal transmission method is provided. The method provided in the second aspect may be performed by a terminal device, or may be performed by a chip configured in a terminal device. This is not limited in this application.

Specifically, the method includes: determining a beam type used for receiving a first downlink signal and/or a second downlink signal, where a time domain resource of the first downlink signal overlaps a time domain resource of the second downlink signal, the beam type includes a first beam type or a second beam type, the first beam type indicates: a first beam used when the terminal device can simultaneously receive a first reference signal and a second reference signal, and/or a second beam used when the terminal device can simultaneously receive the first reference signal and the second reference signal, and the second beam type indicates: a beam used when the terminal device can receive the first reference signal, or a beam used when the terminal device can receive the second reference signal; and receiving the first downlink signal and/or the second downlink signal based on the beam type.

The first downlink signal and the first reference signal have a quasi co-location QCL relationship, the second downlink signal and the second reference signal have a QCL relationship, and a receive beam for the first downlink signal is different from a receive beam for the second downlink signal.

According to the signal transmission method provided in the second aspect, when the time domain resource of the first downlink signal overlaps the time domain resource of the second downlink signal, and the terminal device does not know which beam can be used to receive the first downlink signal, or the terminal device does not know which beam can be used to receive the second downlink signal, the terminal device may determine, based on an indication of a network device, a beam type used for receiving the first downlink signal and/or a beam type used for receiving the second downlink signal, to receive the first downlink signal and/or the second downlink signal based on the beam types/the beam type. According to the method provided in the second aspect, the terminal device determines the receive beam based on the indication of the network device, so that a consistent understanding can be established between the network device and the terminal device. When the network device indicates the terminal device to simultaneously receive signals sent by a plurality of TRPs, the terminal device simultaneously receives two downlink signals based on the indication, thereby improving a signal receiving throughput of the terminal device and improving performance of the terminal device.

In a possible implementation of the second aspect, the first downlink signal is a first PDSCH, the second downlink signal is a second PDSCH, and the method further includes: determining that receiving time of the first PDSCH and receiving time of second DCI meet a first condition, where first DCI is used to schedule the first PDSCH, and the second DCI is used to schedule the second PDSCH. In this implementation, when the sending time of the first PDSCH and the sending time of the second DCI meet the first condition, it indicates that the first PDSCH and the second DCI are close enough, and the terminal device can simultaneously receive the first PDSCH and the second PDSCH only based on the indication of the network device.

For example, the first PDSCH is sent in an N^{th} subframe, the second DCI is sent in an M^{th} subframe, and N is greater than or equal to M.

Alternatively, the first condition is that an interval between the sending time of the first PDSCH and the sending time of the second DCI is less than, or less than or equal to a preset threshold.

It should be understood that the preset threshold may be set based on a specific situation. This is not limited in this embodiment of this application.

Optionally, the sending time of the second DCI is earlier than the sending time of the first PDSCH.

In a possible implementation of the second aspect, the first downlink signal is a first CSI-RS, and/or the second downlink signal is a second CSI-RS, and the method further includes: measuring a reference signal based on an indication of the network device, where the reference signal includes the first reference signal and/or the second reference signal; and sending a reporting type of the reference signal to the network device, where the reporting type includes a first reporting type and a second reporting type.

The first reporting type indicates: The terminal device reports measurement results obtained when the first reference signal and the second reference signal can be simultaneously received, and/or reports an identifier of the first reference signal and an identifier of the second reference signal, and the second reporting type indicates: the terminal device reports a measurement result obtained when the first reference signal can be received and/or the identifier of the first reference signal, or reports a measurement result obtained when the second reference signal can be received and/or the identifier of the second reference signal.

In this implementation, when the reporting type of the reference signal that is sent by the terminal device and that is received by the network device includes the first reporting type and the second reporting type, the terminal device can simultaneously receive the first CSI-RS and the second CSI-RS only based on the indication of the network device.

For example, the first reporting type may be group-based reporting, and the second reporting type may be non-group-based reporting.

In a possible implementation of the second aspect, that the terminal device determines the beam type used for receiving the first downlink signal and/or the second downlink signal includes: receiving media access control control element MAC CE signaling sent by the network device, where the MAC CE signaling indicates the beam type used for the terminal device to receive the first downlink signal and/or the second downlink signal; and determining, based on the MAC CE signaling, the beam type used for receiving the first downlink signal and/or the second downlink signal. In this implementation, the terminal device may explicitly determine, based on the indication of the MAC CE signaling sent by the network device, the beam type used for receiving the first downlink signal. Although additional signaling is introduced, signaling overheads are not high.

In a possible implementation of the second aspect, when the first downlink signal is the first PDSCH, and/or the second downlink signal is the second PDSCH, and that the terminal device determines the beam type used for receiving the first downlink signal and/or the second downlink signal includes: receiving the first DCI sent by a network device, where the first DCI indicates a beam type used for the terminal device to receive the first downlink signal; determining, based on the first DCI, the beam type used for receiving the first downlink signal; and/or receiving the second DCI sent by the network device, where the second DCI indicates a beam type used for the terminal device to receive the second downlink signal; and determining, based on the second DCI, the beam type used for receiving the second downlink signal. In this implementation, the terminal device may explicitly determine, based on the first DCI sent by the network device, the beam type used for receiving the first downlink signal. Compared with an indication manner by using MAC CE signaling, in this manner, because each PDSCH may be separately indicated by using the DCI, control in this manner is more flexible, and DCI decoding at the physical layer is faster. However, because indication needs to be performed in each piece of DCI, signaling overheads are slightly higher.

In a possible implementation of the second aspect, the first downlink signal is the first PDSCH, and/or the second downlink signal is the second PDSCH, and that the terminal device determines the beam type used for receiving the first downlink signal and/or the second downlink signal includes: determining, based on a first transmission configuration indicator TCI configured by a network device, a beam type used for receiving the first downlink signal; and/or determining, based on a second TCI configured by the network device, a beam type used for receiving the second downlink signal. In this implementation, two TCIs need to be configured in RRC configuration, and a quantity of configured TCIs is doubled compared with the foregoing two manners. Therefore, overheads in the RRC configuration are relatively high. For example, for QCL-Typed-SSB 0, two TCIs need to be configured. One TCI corresponds to a beam type capable of simultaneously receiving an SSB 0, and the other TCI corresponds to an optimal beam type used for receiving the SSB 0.

In a possible implementation of the second aspect, that the terminal device determines the beam type used for receiving the first downlink signal and/or the second downlink signal includes: receiving indication information from a network device, where the indication information indicates a reporting type of a reference signal, the reference signal includes the first reference signal and/or the second reference signal, and the reporting type includes a first reporting type and a second reporting type; and the first reporting type indicates: the terminal device reports measurement results obtained when the first reference signal and the second reference signal can be simultaneously received, and/or reports an identifier of the first reference signal and an identifier of the second reference signal, and the second reporting type indicates: the terminal device reports a measurement result obtained when the first reference signal can be received and/or the identifier of the first reference signal, or reports a measurement result obtained when the second reference signal can be received and/or the identifier of the second reference signal; and determining, based on the reporting type, the beam type used for receiving the first downlink signal and/or the second downlink signal. In this implementation, the beam type used for the terminal device to receive the first downlink signal or the second downlink signal is implicitly indicated, and protocol impact is small.

Optionally, the first reporting type may be group-based reporting, and the second reporting type may be non-group-based reporting.

In a possible implementation of the second aspect, that the terminal device receives the first downlink signal and/or the second downlink signal based on the beam type includes: determining, based on the beam type, the first beam and/or the second beam for receiving the first downlink signal and/or the second downlink signal; and when the first beam is a beam in a beam pair through which the terminal device can simultaneously receive the first reference signal and the second reference signal, and/or the second beam is a beam in the beam pair through which the terminal device can simultaneously receive the first reference signal and the second reference signal, receiving the first downlink signal by using the first beam, and simultaneously, receiving the second downlink signal by using the second beam. In this implementation, because the network device indicates the beam type to the terminal device, the terminal device needs to determine a specific beam based on the indication information of the network device, so that the terminal device can receive the first downlink signal and/or the second downlink signal by using the determined beam.

According to a third aspect, a signal transmission method is provided. The method provided in the third aspect may be performed by a network device, or may be performed by a chip disposed in a network device. This is not limited in this application.

Specifically, the method includes: after sending a TCI switching instruction to a terminal device, indicating a beam type used for the terminal device to receive a first downlink signal based on a first TCI, or indicating a beam type used for the terminal device to receive a second downlink signal based on a second TCI, where the beam type includes: a first beam type or a second beam type, the first beam type indicates: a first beam or a second beam in a beam pair through which the terminal device can simultaneously receive a first reference signal and a second reference signal, the second beam type indicates: a beam used when the terminal device can receive the first reference signal, or a beam used when the terminal device can receive the second reference signal, and the TCI switching instruction indicates to switch from the first TCI and the second TCI to the first TCI or the second TCI.

The first TCI is used to receive the first downlink signal, the second TCI is used to receive the second downlink signal, and a receive beam for the first downlink signal is different from a receive beam for the second downlink signal.

According to the method provided in the third aspect, after the network device sends the TCI switching instruction to the terminal device, the terminal device does not know which beam can be used to receive the first downlink signal based on the first TCI, or the terminal device does not know which beam can be used to receive the second downlink signal based on the second TCI. The network device may indicate a beam type used for the terminal device to receive the first downlink signal based on the first TCI, or the network device may indicate a beam type used for the terminal device to receive the second downlink signal based on the second TCI. In this manner, the network device indicates the terminal device to use which beam for receiving, so that a consistent understanding can be established between the network device and the terminal device.

In a possible implementation of the third aspect, indicating the beam type used for the terminal device to receive the first downlink signal based on the first TCI, or the beam type used for the terminal device to receive the second downlink signal based on the second TCI includes: sending a media access control control element MAC CE to the terminal device, where the MAC CE indicates: the beam type used for the terminal device to receive the first downlink signal based on the first TCI, or the beam type used for the terminal device to receive the second downlink signal based on the second TCI. In this implementation, the network device may dynamically and explicitly indicate, by using the MAC CE signaling, the beam type used for receiving the first downlink signal, and the terminal device may explicitly determine, based on the indication of the network device, the beam type used for receiving the first downlink signal. Although additional signaling is introduced, signaling overheads are not high.

In a possible implementation of the third aspect, indicating the beam type used for the terminal device to receive the first downlink signal based on the first TCI, or the beam type used for the terminal device to receive the second downlink signal based on the second TCI includes: sending first DCI to the terminal device, where the first DCI indicates the beam type used for the terminal device to receive the first downlink signal based on the first TCI; or sending second DCI to the terminal device, where the second DCI indicates the beam type used for the terminal device to receive the second downlink signal based on the second TCI. In this implementation, the network device may explicitly indicate, by using the DCI, the beam type used for receiving the first downlink signal based on the first TCI or the beam type used for receiving the second downlink signal based on the second TCI, and the terminal device may explicitly determine, based on the indication of the network device, the beam type used for receiving the first downlink signal based on the first TCI or the beam type used for receiving the second downlink signal based on the second TCI. Compared with an indication manner by using MAC CE signaling, in this manner, because each downlink signal may be separately indicated by using the DCI, control in this manner is more flexible, and DCI decoding at the physical layer is faster. However, because indication needs to be performed in each piece of DCI, signaling overheads are slightly higher.

In a possible implementation of the third aspect, indicating the beam type used for the terminal device to receive the first downlink signal based on the first TCI, or the beam type used for the terminal device to receive the second downlink signal based on the second TCI includes: configuring, in the first TCI, the beam type used for the terminal device to receive the first downlink signal; or configuring, in the second TCI, the beam type used for the terminal device to receive the second downlink signal. In this implementation, two TCIs need to be configured in RRC configuration, and a quantity of configured TCIs is doubled compared with the foregoing two manners. Therefore, overheads in the RRC configuration are relatively high. For example, for QCL-Typed-SSB 0, two TCIs need to be configured. One TCI corresponds to a beam type capable of simultaneously receiving an SSB 0, and the other TCI corresponds to an optimal beam type used for receiving the SSB 0.

According to a fourth aspect, a signal transmission method is provided. The method provided in the fourth aspect may be performed by a terminal device, or may be performed by a chip configured in a terminal device. This is not limited in this application.

Specifically, the method includes: after receiving a TCI switching instruction sent by a network device, determining a beam type used for receiving a first downlink signal based on a first TCI, or determining a beam type used for receiving a second downlink signal based on a second TCI; and based on the beam type, receiving the first downlink signal based on the first TCI, or receiving the second downlink signal based on the second TCI, where the beam type includes a first beam type or a second beam type, the first beam type indicates: a first beam that is used for the terminal device to receive the first downlink signal and that is in a beam pair through which a first reference signal and a second reference signal can be simultaneously received, or a second beam that is used for the terminal device to receive the second downlink signal and that is in the beam pair through which the first reference signal and the second reference signal can be simultaneously received, the second beam type indicates: a beam used when the terminal device can receive the first reference signal, or a beam used when the terminal device can receive the second reference signal, and the TCI switching instruction indicates to switch from the first TCI and the second TCI to the first TCI or the second TCI.

The first TCI is used to receive the first downlink signal, the second TCI is used to receive the second downlink signal, and a receive beam for the first downlink signal is different from a receive beam for the second downlink signal.

According to the method provided in the fourth aspect, after the network device sends the TCI switching instruction to the terminal device, the terminal device does not know which beam can be used to receive the first downlink signal based on the first TCI, or the terminal device does not know which beam can be used to receive the second downlink signal based on the second TCI. The terminal device may determine, based on an indication of the network device, the beam type used for receiving the first downlink signal based on the first TCI, or the terminal device may determine, based on an indication of the network device, the beam type used for receiving the second downlink signal based on the second TCI; and then receives the first downlink signal based on the first TCI and the beam type indicated by the network device, or receives the second downlink signal based on the second TCI and the beam type indicated by the network device. In this manner in which the terminal device determines, based on the indication of the network device, which beam can be used to receive the downlink signal, a consistent understanding can be established between the network device and the terminal device.

In a possible implementation of the fourth aspect, determining the beam type used for receiving the first downlink signal based on the first TCI, or the beam type used for receiving the second downlink signal based on the second TCI includes: receiving media access control control element MAC CE signaling sent by the network device, where the MAC CE signaling indicates: the beam type used for receiving the first downlink signal based on the first TCI, or the beam type used for receiving the second downlink signal based on the second TCI; and determining, by using the MAC CE signaling, the beam type used for receiving the first downlink signal based on the first TCI, or the beam type used for receiving the second downlink signal based on the second TCI. In this implementation, in this implementation, the terminal device may explicitly determine, based on the indication of the MAC CE signaling sent by the network device, the beam type used for receiving the first downlink signal based on the first TCI, or the beam type used for receiving the second downlink signal based on the second TCI. Although additional signaling is introduced, signaling overheads are not high.

In a possible implementation of the fourth aspect, determining the beam type used for receiving the first downlink signal based on the first TCI, or the beam type used for receiving the second downlink signal based on the second TCI includes: receiving first DCI sent by the network device, where the first DCI indicates the beam type used for receiving the first downlink signal based on the first TCI; or receiving second DCI sent by the network device, where the second DCI indicates the beam type used for receiving the second downlink signal based on the second TCI; and determining, based on the first DCI, the beam type used for receiving the first downlink signal based on the first TCI, or determining, by the terminal device based on the second DCI, the beam type used for receiving the first downlink signal based on the second TCI. In this implementation, the terminal device may explicitly determine, based on the first DCI sent by the network device, the beam type used for receiving the first downlink signal based on the first TCI. Compared with an indication manner by using MAC CE signaling, in this manner, because each downlink signal may be separately indicated by using the DCI, control in this manner is more flexible, and DCI decoding at the physical layer is faster. However, because indication needs to be performed in each piece of DCI, signaling overheads are slightly higher.

In a possible implementation of the fourth aspect, determining the beam type used for receiving the first downlink signal based on the first TCI, or the beam type used for receiving the second downlink signal based on the second TCI includes: determining, based on the first TCI configured by the network device, the beam type used for receiving the first downlink signal based on the first TCI; or determining, based on the second TCI configured by the network device, the beam type used for receiving the second downlink signal based on the second TCI. In this implementation, two TCIs need to be configured in RRC configuration, and a quantity of configured TCIs is doubled compared with the foregoing two manners. Therefore, overheads in the RRC configuration are relatively high.

In a possible implementation of the fourth aspect, determining the beam type used for receiving the first downlink signal based on the first TCI, or the beam type used for receiving the second downlink signal based on the second TCI includes: receiving indication information from the network device, where the indication information indicates a reporting type of a reference signal, the reference signal includes the first reference signal and/or the second reference signal, and the reporting type includes a first reporting type and a second reporting type; and the first reporting type indicates: the terminal device reports measurement results obtained when the first reference signal and the second reference signal can be simultaneously received, and/or reports an identifier of the first reference signal and an identifier of the second reference signal, and the second reporting type indicates: the terminal device reports a measurement result obtained when the first reference signal can be received and/or the identifier of the first reference signal, or reports a measurement result obtained when the second reference signal can be received and/or the identifier of the second reference signal; and determining, based on the reporting type, the beam type used for receiving the first downlink signal based on the first TCI, or the beam type used for receiving the second downlink signal based on the second TCI. In this implementation, the beam type used for the terminal device to receive the first downlink signal or the second downlink signal is implicitly indicated, and protocol impact is small.

Optionally, the first reporting type includes group-based reporting, and the second reporting type includes non-group-based reporting.

In a possible implementation of the fourth aspect, based on the beam type, receiving the first downlink signal based on the first TCI, or receiving the second downlink signal based on the second TCI includes: determining, based on the beam type, the first beam used for receiving the first downlink signal based on the first TCI, or determining the second beam used for receiving the second downlink signal based on the second TCI; and receiving the first downlink signal by using the first beam, or receiving, by the terminal device, the second downlink signal by using the second beam.

In a possible implementation of the fourth aspect, the method further includes: determining, based on the beam type, time for completing TCI switching by the terminal device after receiving the TCI switching instruction. In this implementation, after the terminal device determines the used beam type, the network device may determine the time for scheduling the terminal device.

In a possible implementation of the fourth aspect, the method further includes: when the beam type is the second beam type, determining whether a first target beam corresponding to a reference signal indicated by the first TCI is known, or determining whether a second target beam corresponding to a reference signal indicated by the second TCI is known; and when the first target beam is unknown or the second target beam is unknown, after the TCI switching instruction is received, the time for completing TCI switching includes measurement time for determining L1-RSRP by the terminal device.

In a possible implementation of the fourth aspect, determining whether the first target beam corresponding to the reference signal indicated by the first TCI is known, or determining whether the second target beam corresponding to the reference signal indicated by the second TCI is known includes: receiving the indication information from the network device, where the indication information indicates the reporting type of the reference signal, the reference signal includes the first reference signal and the second reference signal, and the reporting type includes the first reporting type or the second reporting type; and when the indication information includes the second reporting type of the first reference signal, determining that the first target beam corresponding to the first TCI is known; or when the indication information includes the second reporting type of the second reference signal, determining that the second target beam corresponding to the second TCI is known.

Optionally, the first reporting type includes group-based reporting, and the second reporting type includes non-group-based reporting.

According to a fifth aspect, a signal transmission system is provided. The system includes a network device and a terminal device. The network device is configured to perform the method according to any one of the first aspect or the possible implementations of the first aspect, and terminal device is configured to perform the method according to any one of the second aspect or the possible implementations of the second aspect.

According to a sixth aspect, a signal transmission system is provided. The system includes a network device and a terminal device. The network device is configured to perform the method according to any one of the third aspect or the possible implementations of the third aspect, and the terminal device is configured to perform the method according to any one of the fourth aspect or the possible implementations of the fourth aspect.

According to a seventh aspect, a communication apparatus is provided. The communication apparatus includes a unit configured to perform each step according to any one of the first aspect or the possible implementations of the first aspect, or a unit configured to perform each step according to any one of the second aspect or the possible implementations of the second aspect, or a unit configured to perform each step according to any one of the third aspect or the possible implementations of the third aspect, or a unit configured to perform each step according to any one of the fourth aspect or the possible implementations of the fourth aspect.

According to an eighth aspect, a communication apparatus is provided. The communication apparatus includes at least one processor and a memory. The processor is coupled to the memory, and the memory stores program instructions. When the program instructions stored in the memory are executed by the processor, the method according to any one of the first aspect or the possible implementations of the first aspect, or the method according to any one of the second aspect or the possible implementations of the second aspect, or the method according to any one of the third aspect or the possible implementations of the third aspect, or the method according to any one of the fourth aspect or the possible implementations of the fourth aspect is performed.

Optionally, the communication apparatus according to the eighth aspect further includes at least one memory.

According to a ninth aspect, a communication apparatus is provided. The communication apparatus includes at least one processor and an interface circuit. The at least one processor is configured to perform the method according to any one of the first aspect or the possible implementations of the first aspect, or the method according to any one of the second aspect or the possible implementations of the second aspect, or the method according to any one of the third aspect or the possible implementations of the third aspect, or the method according to any one of the fourth aspect or the possible implementations of the fourth aspect.

According to a tenth aspect, a terminal device is provided. The terminal device includes the communication apparatus provided in the seventh aspect, or the terminal device includes the communication apparatus provided in the eighth aspect, or the terminal device includes the communication apparatus provided in the ninth aspect.

According to an eleventh aspect, a network device is provided. The network device includes the communication apparatus provided in the seventh aspect, or the network device includes the communication apparatus provided in the eighth aspect, or the network device includes the communication apparatus provided in the ninth aspect.

According to a twelfth aspect, a computer program product is provided. The computer program product includes a computer program. When being executed by a processor, the computer program is configured to perform the method according to any one of the first aspect or the possible implementations of the first aspect, or the method according to any one of the second aspect or the possible implementations of the second aspect, or the method according to any one of the third aspect or the possible implementations of the third aspect, or the method according to any one of the fourth aspect or the possible implementations of the fourth aspect.

According to a thirteenth aspect, a computer-readable storage medium is provided. The computer-readable storage medium stores a computer program. When being executed, the computer program is configured to perform the method according to any one of the first aspect or the possible implementations of the first aspect, or the method according to any one of the second aspect or the possible implementations of the second aspect, or the method according to any one of the third aspect or the possible implementations of the third aspect, or the method according to any one of the fourth aspect or the possible implementations of the fourth aspect.

According to a fourteenth aspect, a chip is provided. The chip includes a processor, configured to invoke a computer program from a memory and run the computer program, so that a communication device in which the chip is installed performs the method according to any one of the first aspect or the possible implementations of the first aspect, or the method according to any one of the second aspect or the possible implementations of the second aspect, or the method according to any one of the third aspect or the possible implementations of the third aspect, or the method according to any one of the fourth aspect or the possible implementations of the fourth aspect.

### BRIEF DESCRIPTION OF DRAWINGS

FIG. 1 is a diagram of a communication system 100 to which an embodiment of this application is applicable;
FIG. 2 is a diagram of a 5G beam management solution;
FIG. 3 is a diagram of scheduling data by using one piece of DCI in an ideal delay scenario;
FIG. 4 is a diagram of scheduling data by using two pieces of DCI in a non-ideal delay scenario;
FIG. 5 is a diagram in which a plurality of panels of a terminal device simultaneously receive two reference signals;
FIG. 6 is a diagram in which a terminal device simultaneously receives downlink signals sent by a network device in multi-TRP;
FIG. 7 is a diagram in which data cannot be simultaneously received because UE selects an optimal TRP beam;
FIG. 8 is a diagram of CSI-RS-based measurement;
FIG. 9 is a diagram in which a terminal device performs CSI-RS 3-based measurement when a CSI-RS periodically appears;
FIG. 10 is a diagram in which a terminal device switches from two TCIs to one TCI;
FIG. 11 is an interaction diagram of an information transmission method 1100 according to an embodiment of this application;
FIG. 12 is an interaction diagram of an information transmission method 1200 according to an embodiment of this application;
FIG. 13 is a block diagram of a communication apparatus 1300 according to an embodiment of this application;
FIG. 14 is a block diagram of another example of a communication apparatus 1400 according to an embodiment of this application;
FIG. 15 is a block diagram of a communication apparatus 1500 according to an embodiment of this application;
FIG. 16 is a block diagram of another example of a communication apparatus 1600 according to an embodiment of this application;
FIG. 17 is a diagram of a structure of a terminal device 1700 according to this application;
FIG. 18 is a diagram of a structure of a network device 1800 according to an embodiment of this application; and
FIG. 19 is a diagram of a chip system according to an embodiment of this application.

### DESCRIPTION OF EMBODIMENTS

The following describes technical solutions of this application with reference to accompanying drawings.

The technical solutions in embodiments of this application may be applied to various communication system, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a future 5th generation (5th generation, 5G) system, or a new radio (new radio, NR) system.

The terminal device in embodiments of this application may also be referred to as user equipment, an access terminal, a subscriber unit, a subscriber station, a mobile station, a remote station, a remote terminal, a mobile device, a user terminal, a terminal, a wireless communication device, a user agent, a user apparatus, or the like. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G network, a terminal device in a future evolved public land mobile network (public land mobile network, PLMN), or the like. This is not limited in embodiments of this application.

The network device in embodiments of this application may be a base transceiver station (base transceiver station, BTS) in a global system for mobile communications (global system for mobile communications, GSM) or code division multiple access (code division multiple access, CDMA), or may be a NodeB (NodeB, NB) in a wideband code division multiple access (wideband code division multiple access, WCDMA) system, or may be an evolved NodeB (evolved NodeB, eNB or eNodeB) in an LTE system, or may be a radio controller in a cloud radio access network (cloud radio access network, CRAN) scenario. Alternatively, the network device may be a relay station, an access point, a vehicle-mounted device, a wearable device, a network device in a future 5G network, a network device in a future evolved PLMN network, or the like. This is not limited in embodiments of this application.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier or medium. For example, a computer-readable medium may include but is not limited to: a magnetic storage component (for example, a hard disk, a floppy disk, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a wireless channel, and various other media that can store, include, and/or carry instructions and/or data.

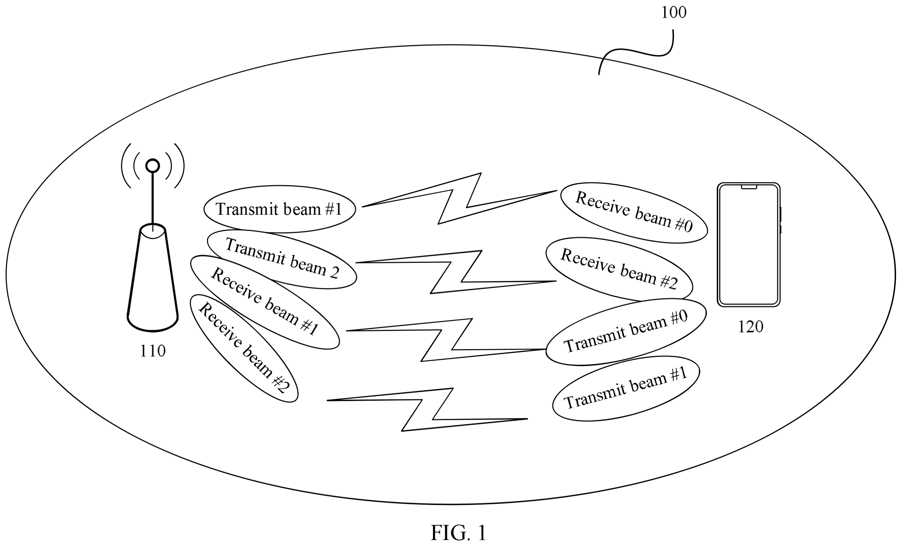

For ease of understanding of embodiments of this application, a communication system to which embodiments of this application are applicable is first described in detail with reference to FIG. 1.

FIG. 1 is a diagram of a communication system 100 to which an embodiment of this application is applicable. As shown in FIG. 1, the communication system 100 includes at least one network device 110 and at least one terminal device 120. In the communication system 100, the terminal device and the network device may obtain one or more beam pairs that enable better communication in a beam management process. The beam pairs are <Bx, B'x> and <By, B'y>, where Bx represents a transmit beam of the network device, B'x represents a receive beam of the terminal device, By represents a transmit beam of the terminal device, and B'y represents a receive beam of the network device. For example, refer to FIG. 1. A transmit beam #1 of the network device and a receive beam #0 of the terminal device are a beam pair, and a transmit beam #2 of the network device and a receive beam #2 of the terminal device are a beam pair. A transmit beam #0 of the terminal device and a receive beam #1 of the network device are a beam pair, and a transmit beam #1 of the terminal device and a receive beam #2 of the network device are a beam pair.

In the communication system 100, beams of the terminal device 120 and the network device 110 need to be aligned to perform normal communication. Because the terminal device and the network device each can face toward a plurality of beam directions, a prerequisite for communication is that a correct beam indication is required. Specifically, in downlink communication, the network device needs to notify the terminal device of a receive beam that can be used to receive a signal subsequently sent by the network device, or notify the terminal device of a transmit beam that is used by the network device to subsequently send a signal, or a QCL relationship for downlink reception. In uplink communication, the network device needs to notify the terminal device of a transmit beam that should be used to send an uplink signal, or notify the terminal device of a receive beam that is used by the network device to receive a signal sent by the terminal device. For example, in downlink transmission, the network device may notify the terminal device that a same beam is used for downlink sending and a reference signal 1. In this case, the terminal device needs to perform receiving by using a beam for receiving the reference signal 1. For another example, in uplink transmission, the network device may notify the terminal device to perform transmission by using the transmit beam #0, so that the network device performs receiving by using the receive beam #1. Alternatively, the network device may notify that a receive beam used by the network device is the receive beam #0, so that the terminal device needs to perform transmission by using the transmit beam #0.

For ease of understanding embodiments of this application, the following briefly describes several terms in this application.
1. Beam: The beam is a communication resource. The beam may be a wide beam, a narrow beam, or another type of beam. A technology for forming the beam may be a beamforming (beamforming) technology or another technical means. The beamforming technology may be specifically a digital beamforming technology, an analog beamforming technology, or a hybrid digital/analog beamforming technology. Different beams may be considered as different resources. Same information or different information may be sent by different beams. Optionally, a plurality of beams having a same or similar communication feature may be considered as one beam. One beam may include one or more antenna ports, configured to transmit a data channel, a control channel, a sounding signal, and the like.

The beam may alternatively be understood as a spatial resource, and may be a transmit or receive precoding vector having energy transmission directivity. The energy transmission directivity may indicate that a signal, received in a spatial position, on which precoding processing is performed by using the precoding vector has good received power, for example, meets a received demodulation signal to noise ratio. The energy transmission directivity may also indicate that a same signal sent from different spatial positions and received by using the precoding vector differs in received power. A same device (for example, a network device or a terminal device) may have different precoding vectors, and different devices may also have different precoding vectors, to be specific, the different precoding vectors correspond to different beams. For a configuration or a capability of a device, one device may use one or more of a plurality of different precoding vectors at a same moment, in other words, one or more beams may be formed at the same time. From perspectives of transmitting and receiving, beams can be classified into a transmit beam and a receive beam.

The transmit beam is a directional beam transmitted by a multi-antenna by using the beamforming technology.

The receive beam is also directional in a direction of receiving a signal, and is directed to a direction of arrival of a transmit beam as much as possible, to further improve a received signal-to-noise ratio and avoid interference between users.

The beam may also be referred to as a spatial domain filter (spatial filter), or referred to as a spatial filter (spatial filter) or a spatial parameter (spatial parameter). The transmit beam may also be referred to as a spatial domain transmit filter, and the receive beam may also be referred to as a spatial domain receive filter.

2. Beam pairing relationship: The beam pairing relationship is a pairing relationship between a transmit beam and a receive beam, namely, a pairing relationship between a spatial transmit filter and a spatial receive filter. A large beamforming gain can be obtained through transmission of a signal between a transmit beam and a receive beam that have a beam pairing relationship.

In an implementation, a transmit end and a receive end may obtain a beam pairing relationship through beam training. Specifically, the transmit end may send a reference signal in a beam sweeping manner, and the receive end may also receive the reference signal in the beam sweeping manner. Specifically, the transmit end may form different directional beams in space in a beamforming manner, and may perform polling on a plurality of different directional beams, to transmit a reference signal by using the different directional beams, so that power of transmitting the reference signal can reach a maximum value in a direction directed by using a transmit beam. The receive end may also form different directional beams in space in the beamforming manner, and may perform polling on a plurality of different directional beams, to receive a reference signal through the different directional beams, so that power of receiving the reference signal by the receive end can reach a maximum value in a direction directed by a reception beam.

3. Reference signal and reference signal resource: The reference signal may be used for channel measurement, channel estimation, or the like. The reference signal resource may be used to configure transmission attributes of a reference signal, for example, a time-frequency resource position, a port mapping relationship, a power factor, and a scrambling code. For details, refer to the conventional technology. A transmitter device may send the reference signal based on the reference signal resource, and a receiver device may receive the reference signal based on the reference signal resource.

The channel measurement in this application also includes beam measurement. To be specific, beam quality information is obtained by measuring the reference signal, and a parameter used to measure beam quality includes a reference signal received power (reference signal received power, RSRP). However, this is not limited thereto. For example, the beam quality may alternatively be measured by using parameters such as a reference signal received quality (reference signal received quality, RSRQ), a signal-to-noise ratio (signal-noise ratio, SNR), a signal to interference plus noise ratio (signal to interference plus noise ratio, SINR), a block error rate (block error rate, BLER), and a signal quality indicator (channel quality indicator, CQI). In embodiments of this application, for ease of description, unless otherwise specified, the channel measurement may be considered as the beam measurement.

The reference signal may include, for example, a channel state information reference signal (channel state information reference signal, CSI-RS), a synchronization signal block (synchronization signal block, SSB), or a sounding reference signal (sounding reference signal, SRS). Correspondingly, the reference signal resource may include a CSI-RS resource (CSI-RS resource), an SSB resource, and an SRS resource (SRS resource).

It should be noted that the SSB may also be referred to as a synchronization signal/physical broadcast channel block (synchronization signal/physical broadcast channel block, SS/PBCH block), and the corresponding SSB resource may also be referred to as a synchronization signal/physical broadcast channel block resource (SS/PBCH block resource) that may be briefly referred to as the SSB resource.

To distinguish between different reference signal resources, each reference signal resource may correspond to one reference signal resource identifier, for example, a CSI-RS resource indicator (CSI-RS resource indicator, CRI), an SSB resource indicator (SSB resource indicator, SSBRI), or an SRS resource index (SRS resource index, SRI). The SSB resource indicator may also be referred to as an SSB index (SSB index).

It should be understood that the reference signal and the corresponding reference signal resource listed above are merely examples for description, and should not constitute any limitation on this application. This application does not exclude a possibility of defining another reference signal in a future protocol to implement a same or similar function.

4. Beam indication information: The beam indication information indicates information about a beam used for transmission. The beam used for the transmission includes a transmit beam and/or a receive beam. The beam indication information may be one or more of the following: a beam identification (or number, index (index), identity (identity, ID), and the like), an uplink signal resource number, a downlink signal resource number, an absolute index of a beam, a relative index of a beam, a logical index of a beam, an index of an antenna port corresponding to a beam, an index of an antenna port group corresponding to a beam, an index of a downlink signal corresponding to a beam, a time index of a downlink synchronization signal block corresponding to a beam, beam pair link (beam pair link, BPL) information, a transmit parameter (Tx parameter) corresponding to a beam, a receive parameter (Rx parameter) corresponding to a beam, a transmit weight corresponding to a beam, a weight matrix corresponding to a beam, a weight vector corresponding to a beam, a receive weight corresponding to a beam, an index of a transmit weight corresponding to a beam, an index of a weight matrix corresponding to a beam, an index of a weight vector corresponding to a beam, an index of a receive weight corresponding to a beam, a receive codebook corresponding to a beam, a transmit codebook corresponding to a beam, an index of a receive codebook corresponding to a beam, or an index of a transmit codebook corresponding to a beam. The downlink signal may be one or more of the following: a synchronization signal, a broadcast channel, a broadcast signal demodulation signal, a synchronization signal/broadcast channel block (synchronous signal/PBCH block, SSB), a channel state information reference signal (channel state information reference signal, CSI-RS), a cell-specific reference signal (cell-specific reference signal, CS-RS), a UE-specific reference signal (user equipment specific reference signal, US-RS), a downlink control channel demodulation reference signal (dedicated reference signal, DMRS), a downlink data channel demodulation reference signal, or a downlink phase tracking reference signal. An uplink signal may be one or more of the following: an uplink random access sequence, an uplink sounding reference signal (sounding reference signal, SRS), an uplink control channel demodulation reference signal, an uplink data channel demodulation reference signal, or an uplink phase tracking reference signal.

The beam indication information may alternatively be represented as a transmission configuration indicator (Transmission Configuration Index, TCI) or a TCI state. One TCI state includes one or more pieces of QCL information, and each piece of QCL information includes an ID of one reference signal (or one synchronization signal block) and one QCL type. For example, a terminal device may need to determine, based on a TCI state (which is usually carried on a physical downlink control channel (physical downlink control channel, PDCCH)) indicated by a network device, a beam for receiving a physical downlink shared channel (physical downlink shared channel, PDSCH).

5. Quasi co-location (quasi co-location, QCL): The quasi co-location is also referred to as quasi-colocation. A quasi-colocation relationship indicates that a plurality of resources have one or more same or similar communication features. For the plurality of resources that have the quasi-colocation relationship, a same or similar communication configuration may be used. Details are described below. Signals corresponding to antenna ports that have a QCL relationship have a same parameter; a parameter (which may also be referred to as a QCL parameter) of an antenna port may be used to determine a parameter of another antenna port that has a QCL relationship with the antenna port; two antenna ports have a same parameter; or a parameter difference between two antenna ports is less than a threshold. The parameter may include one or more of the following: a delay spread (delay spread), a Doppler spread (Doppler spread), a Doppler shift (Doppler shift), an average delay (average delay), an average gain, and a spatial receive parameter (spatial Rx parameters). The spatial receive parameter may include one or more of the following: an angle of arrival (angle of arrival, AOA), an average AOA, an AOA spread, an angle of departure (angle of departure, AOD), an average angle of departure AOD, an AOD spread, a receive antenna spatial correlation parameter, a transmit antenna spatial correlation parameter, a transmit beam, a receive beam, and a resource identifier.

In an NR protocol, the QCL relationship may be classified into the following four types based on different parameters:
type A (type A): a Doppler shift, a Doppler spread, an average delay, and a delay spread;
type B (type B): the Doppler shift and the Doppler spread;
type C (type C): the Doppler shift and the average delay; and
type D (type D): a spatial receive parameter.

6. Quasi-colocation assumption (QCL assumption): The QCL assumption means that it is assumed that whether there is a QCL relationship between two ports. A configuration and an indication of the quasi-colocation assumption may be used to help a receive end receive and demodulate a signal. For example, the receive end can assume that there is a QCL relationship between a port A and a port B. To be specific, a large-scale parameter of a signal obtained through measurement on the port A may be used for signal measurement and demodulation on the port B. The large-scale parameter may include the parameter of the antenna ports.

7. Transmission configuration indicator (transmission configuration indicator, TCI) state: The TCI state may indicate a QCL relationship between two types of PDSCH/PDCCH/PUSCH/PUCCH and a reference signal. Each TCI state may include a serving cell index (Serve Cell Index), a bandwidth part (bandwidth part, BWP) identifier (identifier, ID), and a reference signal resource identifier. The reference signal resource identifier may be, for example, at least one of the following: a non-zero power (non-zero power, NZP) CSI-RS reference signal resource identifier (NZP-CSI-RS-ResourceId), a non-zero power CSI-RS reference signal resource set identifier (NZP-CSI-RS-ResourceSetId), or an SSB index (SSB-Index). A TCI state may be distinguished by using an identifier of the TCI state (TCI-StateId).

The serving cell index, the BWP ID, and the reference signal resource identifier indicate a reference signal resource used in a beam training process, and a serving cell and a BWP that correspond to the reference signal resource. In the beam training process, a network device sends, by using different transmit beams, reference signals based on different reference signal resources, and therefore, the reference signals sent by using the different transmit beams may be associated with the different reference signal resources; a terminal device receives, by using different receive beams, reference signals based on different reference signal resources, and therefore, the reference signals received by using the different receive beams may also be associated with the different reference signal resources. Therefore, in the beam training process, the terminal device may maintain a correspondence among a serving cell index, a BWP ID, a reference signal resource identifier, and a receive beam, and the network device may maintain a correspondence among a serving cell index, a BWP ID, a reference signal resource identifier, and a transmit beam. A pairing relationship between a receive beam and a transmit beam may be established by using a reference signal resource identifier.

In a subsequent communication process, the terminal device may determine a receive beam based on a TCI state indicated by the network device, and the network device may determine a transmit beam based on the same TCI state.

8. TCI: The TCI may indicate a TCI state.

In an implementation, a network device may configure a TCI state (TCI state) list for a terminal device by using higher layer signaling (for example, a radio resource control (radio resource control, RRC) message). For example, the network device may configure the TCI state list for the terminal device by using a TCI state to add mode list (tci-States To Add ModList) in the RRC message. The TCI state list may include a plurality of TCI states. For example, the network device may configure a maximum of 64 TCI states for each bandwidth part (bandwidth part, BWP) in each cell.

Then, the network device may activate one or more TCI states by using higher layer signaling (for example, a media access control (media access control, MAC) control element (control element, CE)). The activated TCI state is a subset of the TCI state list configured in the RRC message. For example, the network device may activate a maximum of eight TCI states for each BWP in each cell.

Then, the network device may further indicate a selected TCI state by using a TCI field in physical layer signaling (for example, downlink control information (downlink control information, DCI)). The DCI may be, for example, applicable to DCI for scheduling a physical downlink resource.

In an existing communication system, with use of a large-scale antenna technology, a directional beam may be formed by adjusting a weight of an antenna array, to improve a beam gain and reduce interference to a surrounding user. Especially in a 5G system, as a frequency band becomes higher, a transmission path of a high frequency increases, and a beamforming technology is required to form beams pointing to different directions, to improve beam coverage performance. In FR2 (frequency range), that is, a millimeter-wave frequency band, UE (User Equipment, user equipment) uses an antenna array to form a beam to overcome a high-frequency coverage problem.

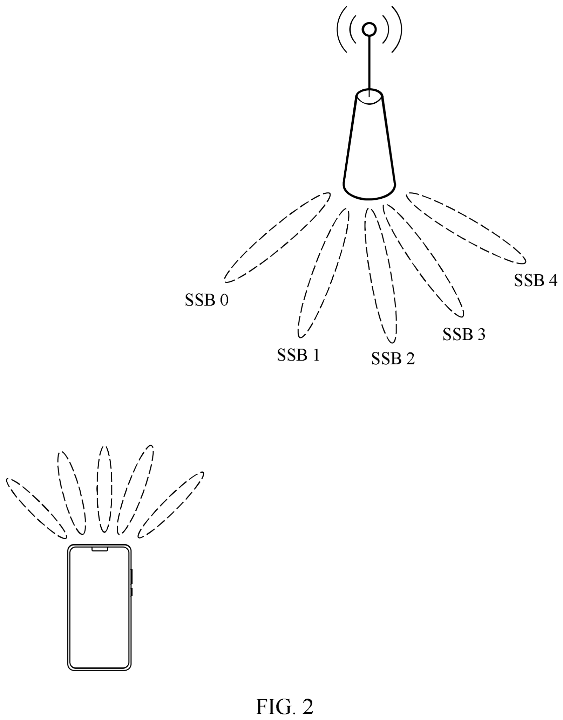

FIG. 2 is a diagram of a 5G beam management solution. As shown in FIG. 2, a base station sends different reference signals in different directions, the base station sends an SSB by using a transmit beam, and UE measures the SSB after receiving the SSB by using a receive beam, to obtain a measurement result RSRP of each SSB. In this way, a best transmit beam (Tx beam) of the gNB for the UE can be learned. In addition, in FR2, the UE may alternatively receive, by using different receive beams (Rx beams), SSBs sent by a network, to determine a best receive beam for an SSB 1.

The UE may report a measurement result to the network device, and the network device learns that for the UE, the SSB 1 is a best transmit beam direction. The network device may send data to the UE in the direction. In a 5G system, a network device indicates beam information by using a TCI configuration. A QCL relationship is indicated in the TCI, and QCL-TypeD may indicate that beam information is inherited from a reference signal. For example, if the network device schedules the UE to receive a downlink PDSCH, and a TCI of the PDSCH is configured as QCL-TypeD-SSB 1, the UE may receive the PDSCH by using an Rx beam for receiving the SSB 1.

In downlink transmission, a terminal device may simultaneously communicate with a plurality of network devices, that is, one terminal device may simultaneously receive data from a plurality of network devices. This transmission mode is referred to as coordinated multipoint transmission/reception (coordinated multiple points transmission/reception, CoMP). The plurality of network devices form a coordinating cluster to simultaneously communicate with the terminal device. The network devices in the coordinating cluster may be separately connected to different control nodes, and the control nodes exchange information with each other. For example, the control nodes exchange scheduling policy information to achieve coordinated transmission. Alternatively, all the network devices in the coordinating cluster are connected to one control node. The control node receives state information (for example, channel state information (channel state information, CSI)) or a reference signal received power (reference signal received power, RSRP) that is reported by terminal devices and that is collected by the plurality of network devices in the coordinating cluster, performs unified scheduling on all the terminal devices in the coordinating cluster based on state information of the terminal devices in the coordinating cluster, and then indicates, through interaction, a scheduling policy to the network devices connected to the terminal devices. Then each network device notifies a respective terminal device by using DCI signaling carried on a PDCCH.

On the terminal device, an antenna array and a radio frequency component that form the terminal device form a panel (panel). At a same moment, a same panel of the UE can form a beam pointing to only one direction. In a millimeter-wave spectrum, UE usually uses a plurality of panels to form an antenna array. These panels may be installed at different locations of the UE, so that correlation between signals received by different panels is reduced, and receiving performance is improved.

When the UE has a plurality of panels, theoretically, different panels can be used to receive data from different directions, thereby improving a data throughput. In 5G Rel-16, an mTRP (multi transmission reception point, multi transmission reception point) technology is enhanced. As shown in the following figure, the network device may transmit data to a same terminal device by using two TRPs in the coordinating cluster, to transmit same data (diversity, improving reliability) or transmit different data (multiplexing, improving a data throughput).

Based on a value of an information exchange delay between network devices in the coordinating cluster, a CoMP transmission scenario may be classified into an ideal delay scenario and a non-ideal delay scenario.

The following briefly describes the ideal delay scenario and the non-ideal delay scenario.

In the ideal delay scenario, because an inter-site distance between network devices or between a network device and a control node is relatively short, or an optical fiber with a relatively small transmission loss is used for connection, an interaction delay between the network devices can be ignored. In this case, interaction between the network devices is a dynamic real-time interaction process. Usually, it may be assumed that a coordination mechanism is as follows: Network devices in a coordinating cluster have a central scheduling node (control node), configured to perform joint resource scheduling for all terminal devices served by a plurality of network devices. The network devices are responsible for receiving information, such as CSI and scheduling requests, that is fed back by the terminal devices, and backhauling (backhaul) the information to the central scheduling node. The central scheduling node collects feedbacks from the network devices in the coordinating cluster to perform scheduling, and backhauls a scheduling policy to the network devices. A serving network device (for example, a serving transmission reception point (serving transmission reception point, Serving TRP)) in the coordinating cluster delivers control information DCI to the terminal devices. According to the scheduling policy, data of the terminal devices is delivered by the serving TRP, or jointly delivered (coordinately transmitted) by the serving TRP and a coordinate network device (for example, a coordinate transmission reception point (coordinate transmission reception point, coordinate TRP)).

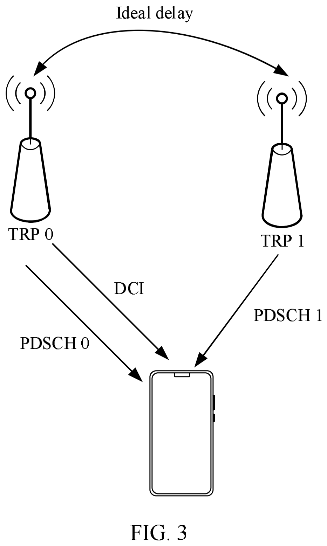

In the ideal delay scenario, data scheduling may be indicated by using one piece of DCI. FIG. 3 is a diagram of scheduling data by using one piece of DCI in an ideal delay scenario. It is assumed that a TRP 0 serves as a serving TRP (namely, a serving base station), and a TRP 1 is responsible for delivering DCI to a terminal device, where the DCI is used to notify a sending manner and a time-frequency resource occupied by data to be sent to the terminal device. The TRP 1 is a coordinate TRP, and data of the terminal device is jointly delivered by the TRP 0 and the TRP 1. Data delivered by the TRP 0 is a PDSCH 0, and data delivered by the TRP 1 is a PDSCH 1. That is, in the ideal delay scenario, control and data exchange are smoothly performed between TPRs. This enables a TRP to schedule transmission of a plurality of TRPs, and schedule PDSCHs of two TRPs by using DCI from one TRP.

The sending manner includes a quantity of transmission layers used to transmit data, a modulation and coding scheme of each codeword (codeword), receive beam indication information, and the like. One codeword corresponds to one or more specific transmission layers. Each codeword corresponds to an independent modulation and coding scheme, and whether to enable or disable the codeword may be dynamically indicated.

In the non-ideal delay scenario, because an interaction delay between network devices (for example, TRPs) causes a performance loss, the interaction delay between the network devices cannot be ignored. Therefore, in this scenario, two TRPs each usually deliver one piece of DCI for data scheduling. In this case, scheduling information needs to be exchanged between the two TRPs or between the two TRPs and a control node only semi-persistently. Each piece of DCI may independently indicate at least resource allocation information, a modulation and coding scheme of a corresponding codeword, and a corresponding transmission layer.

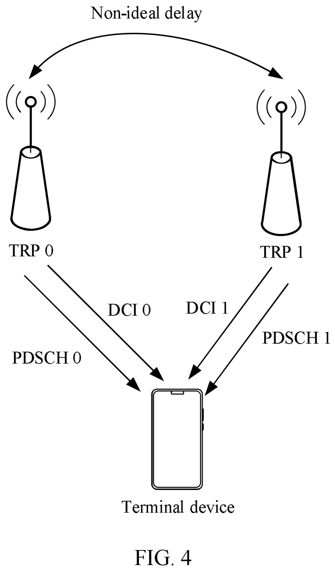

FIG. 4 is a diagram of scheduling data by using two pieces of DCI in a non-ideal delay scenario. As shown in FIG. 4, a TRP 0 sends DCI 0 to a terminal device, to schedule transmission of a PDSCH 0. A TRP 1 sends DCI 1 to the terminal device to schedule transmission of a PDSCH 1. Each piece of DCI corresponds to one codeword. That is, in the non-ideal delay scenario, each TRP separately transmits a PDCCH for scheduling a PDSCH. Specifically, a network device divides control resource sets (control resource set, CORESET) into two groups by configuring a parameter CORESETPoolIndex for the terminal device, to indicate that the control resource sets are from two TRPs. UE receives data sent by a corresponding TRP by receiving DCI in Coresets with different CORESETPoolIndex identifiers.

It should be noted that, before the network device performs data transmission, the network device needs to notify, by using DCI, the terminal device to receive data on a specific time-frequency resource in a specific receiving manner. Before the terminal device performs data transmission, the network device needs to notify, by using DCI, the terminal device to send data on a specific time-frequency resource in a specific sending manner. An information bit of the DCI is transmitted to a channel coding module, and rate matching is performed. Then, a control information bit is modulated according to a specific criterion (for example, quadrature phase shift keying (quadrature phase shift keying, QPSK)), and is finally mapped to the time-frequency-domain resource to form a PDCCH.

A time-frequency resource occupied by the PDCCH is usually configured by using higher layer signaling or by using a system message. In a configuration process, a CORESET is used as a configuration unit. All information bits (used to schedule the terminal device to receive a PDSCH or send a PUSCH) of the DCI indicated by the network device to the terminal device are carried on the PDCCH. Alternatively, this may be understood as that the information bits of the DCI are carried on the time-frequency resource occupied by the PDCCH. The CORESET may be understood as follows: Some specific time-frequency resources of time-frequency resources in a system are used to carry DCI signaling. The specific time-frequency resources are notified to the terminal device in advance by using higher layer signaling, so that the terminal device may monitor DCI signaling on the specific time-frequency resources at subsequent specific monitor occasions. The control resource set includes information about the time-frequency resource occupied by the network device to send the PDCCH. The network device may configure one or more control resource sets for the terminal device. The network device may send the PDCCH to the terminal device on any control resource set corresponding to the terminal device.

For data from two TRPs, the network device may configure different TCIs for the terminal device. For example, a TCI of the PDSCH 0 is configured as (QCL-typeD-SSB 0), and a TCI of the PDSCH 1 is configured as (QCL-typeD-SSB 2). In other words, the terminal device receives data from different TRPs by using Rx beams for receiving the SSB 0 and the SSB 2. However, the network device cannot learn whether the terminal device receives the SSB 0 and the SSB 2 on a same panel. Therefore, group-based reporting is introduced in group-based beam reporting-r17. The network device may configure reference signals (SSBs/CSI-RSs) as two sets, and the two sets respectively correspond to two TRPs. The UE selects, from the two sets, two reference signals that can be simultaneously received, and reports the two reference signals to the network device.

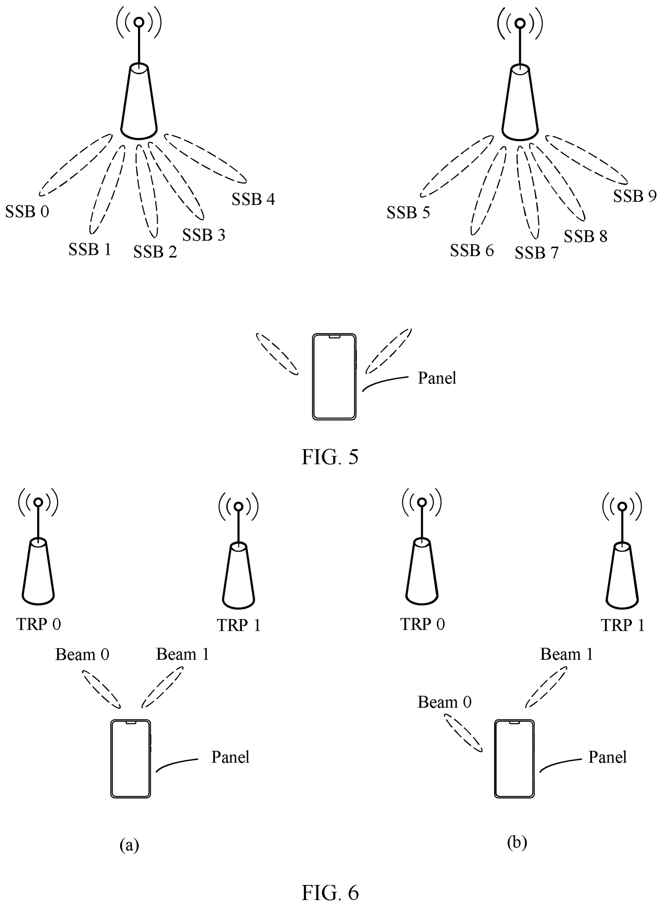

For example, FIG. 5 is a diagram in which a plurality of panels of a terminal device simultaneously receive two reference signals. As shown in FIG. 5, a network device configures reference signals (an SSB 0 to an SSB 9) as two sets, the SSB 0 to the SSB 4 are a set 1, and the SSB 5 to the SSB 9 are a set 2. It can be learned from FIG. 5 that the SSB 3 in the set 1 and the SSB 6 in the set 2 may be simultaneously received by different panels of the terminal device. In this case, the terminal device may report (SSB 3, SSB 9) to the network device as a group. The network device may know that data is sent to the terminal device by using beams corresponding to the SSB 3 and the SSB 9, and the terminal device may simultaneously receive a PDSCH 1 and a PDSCH 2 by using the beam for receiving the SSB 3 and the beam for receiving the SSB 9.

It should be understood that, when the plurality of panels of the terminal device can simultaneously receive data, a data receiving rate of the terminal device is improved, and diversity gains may be brought. This improves data receiving reliability, and finally enhances performance of the terminal device.

In a related technology, for UE that can simultaneously receive different QCL-typeD, the network device configures two reference signal sets for the terminal device, that is, the two reference signal sets respectively correspond to different TRPs, and indicates that the terminal device can perform group-based reporting. Then, the terminal device determines, by measuring the reference signal set configured by the network device, which reference signals can be simultaneously received, and reports a measurement result to the network device. Finally, the network device configures a TCI by using a beam pair reported by the terminal device, and schedules the terminal device to perform simultaneous receiving.

However, the beam pair reported by the terminal device may not be an optimal beam for all TRPs. When beams that are reported by the terminal device and that are optimal for all TRPs are located on a same panel, the UE cannot simultaneously receive data sent by the network device. In other words, if the UE wants to simultaneously receive, in different directions, downlink signals sent by the network device, the terminal device needs to receive, by using beams in a beam pair, the downlink signals that need to be sent by the network device.

For example, FIG. 6 is a diagram in which a terminal device simultaneously receives downlink signals sent by a network device in multi-TRP. As shown in (a) in FIG. 6, a beam that is determined by the terminal device and that is optimal for a TRP 0 is a beam 0, and a beam that is determined by the terminal device and that is optimal for a TRP 1 is a beam 1. For the terminal device, the two beams are located on a same panel, and the terminal device cannot simultaneously receive downlink signals sent by the network device in the two directions. In this case, when the terminal device schedules to simultaneously receive the downlink signals sent by the network device, the terminal device needs to report, to the network device, a beam pair through which the downlink signals sent by the network device can be simultaneously received. For example, as shown in (b) in FIG. 6, the terminal device may select the beam 1 as a suboptimal beam of the TRP 0. In other words, the beam 1 and the beam 0 form a beam pair, and the beam pair is reported to the network device.

Based on the foregoing implementation, inconsistent understanding between the terminal device and the network device may occur. For example, the network device schedules, by using the TRP 0, the terminal device to perform receiving. In this case, the terminal device may have the following two beam policy selections:

In a first manner, the terminal device may use the optimal beam 0 of the TRP 0 to achieve an optimal throughput.

Alternatively, in a second manner, the terminal device may perform simultaneous receiving by using the suboptimal beam 1.

In this case, when the terminal device has two beam policy selections, the network device cannot determine which beam policy the terminal device selects to receive the downlink signal. Similarly, the terminal device cannot determine an intention of the network device. As a result, the terminal device may fail to perform simultaneous receiving, or the terminal device cannot select an optimal beam to achieve optimal receiving performance.

For example, when the network device sends different PDSCHs by using different TRPs, the network device schedules, by using different coresetPoolIndex values, the terminal device to receive downlink signals, and the network device schedules the terminal device to simultaneously receive downlink signals delivered by a plurality of network devices. It is assumed that the terminal device reports, to the network device, that a beam pair through which reference signals can be simultaneously received is a beam pair through which (SSB 0, SSB 1) can be simultaneously received, a beam corresponding to the SSB 0 is a beam 2, and a beam corresponding to the SSB 1 is the beam 1. However, for the SSB 0, an optimal receive beam of the terminal device is the beam 0.

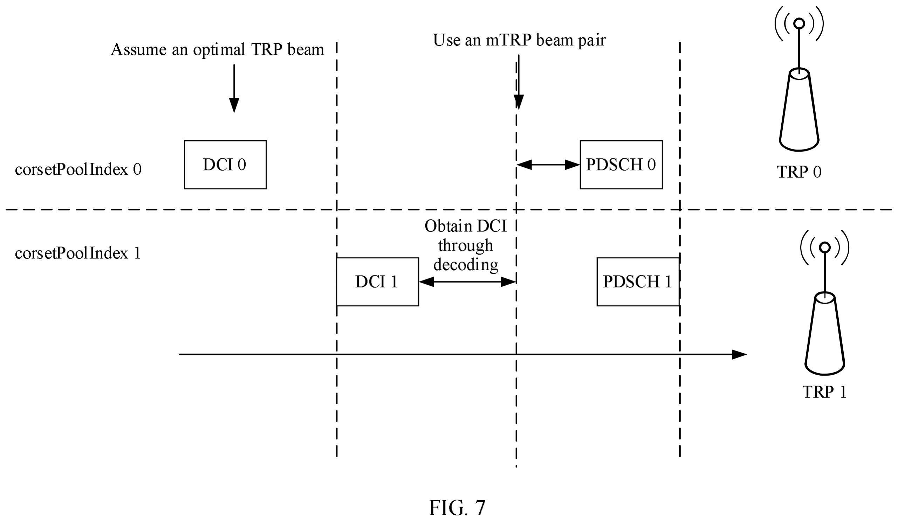

FIG. 7 is a diagram in which data cannot be simultaneously received because UE selects an optimal TRP beam. As shown in FIG. 7, a TRP 0 sends DCI 0 to a terminal device by using coresetPoolIndex 0, to schedule a data PDSCH 0 by using the DCI 0. A TCI of the TRP 0 is configured as (QCL-typeD SSB 0), and (QCL-typeD SSB 0) indicates that the terminal device may receive, by using a beam for receiving the SSB 0, data sent by the TRP 0. However, the beam for receiving the SSB 0 corresponds to two beams. One is a beam 0 with good receiving performance, and the other is a beam 2 over which a reference signal can be simultaneously received. Therefore, the terminal device does not know which beam should be used for receiving. In this case, the terminal device may select (beam 0) that achieves optimal performance of a single TRP to receive data. Then, a TRP 1 sends DCI 1 to the terminal device by using coresetPoolIndex 1, to schedule a data PDSCH 1 by using the DCI 1. In other words, the terminal device receives the DCI 1 from another TRP 1 by using coresetPoolIndex 1. Because the PDSCH 0 and the PDSCH 1 that are received by the terminal device overlap in receiving time, the terminal device can determine that the network device expects the terminal device to simultaneously receive the PDSCH 0 and the PDSCH 1. In this case, if the DCI 1 and the PDSCH 0 are close enough, the terminal device may not have enough time to switch the beam. Consequently, the terminal device cannot simultaneously receive the PDSCH 0 and the PDSCH 1. In other words, the example shown in FIG. 7 shows that because the terminal device does not know the intention of the network device, the terminal device cannot perform simultaneous receiving.

For another example, the network device sends different CSI-RS data to the terminal device by using different TRPs. When the network device configures CSI-RS-based measurement for the terminal device, the network device may periodically send the CSI-RS. It is assumed that for a CSI-RS resource/resource set, the network device configures both group-based reporting and non-group-based reporting. For the CSI-RS resource, the terminal device does not determine whether to use a TRP optimal beam policy or a beam pair policy.

It should be understood that the group-based reporting indicates: The terminal device reports measurement results obtained when a first reference signal and a second reference signal can be simultaneously received, and/or the terminal device reports identifiers of the first reference signal and the second reference signal that can be simultaneously received. The non-group-based reporting indicates: The terminal device reports a measurement result obtained when the first reference signal can be received and/or the identifier of the first reference signal, or the terminal device reports a measurement result obtained when the second reference signal can be received and/or the identifier of the second reference signal.

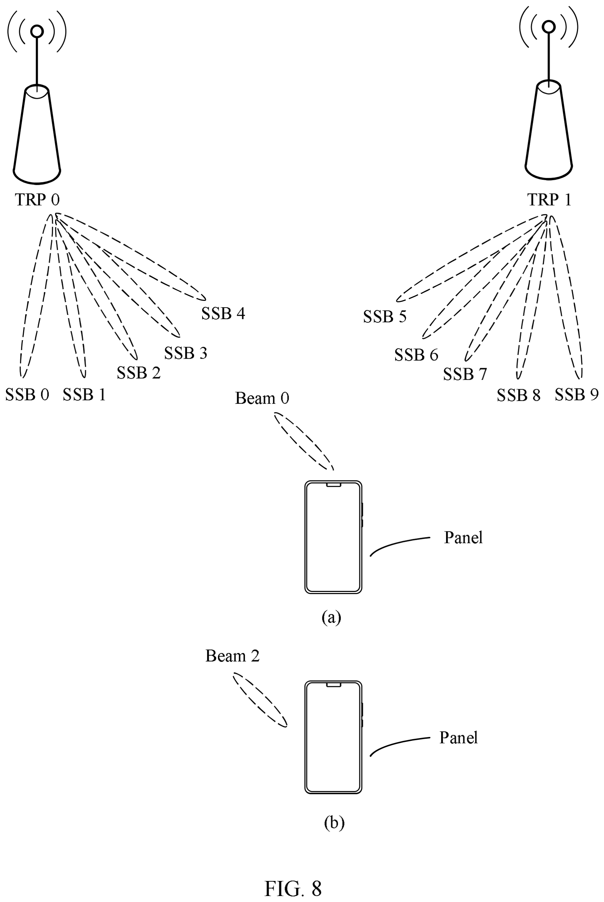

FIG. 8 is a diagram of CSI-RS-based measurement. A network device configures CSI-RS-based L1-RSRP measurement for a terminal device, and configures both group-based reporting and non-group-based reporting. For a CSI-RS resource, for example, a CSI-RS 3, the network device configures QCL typeD-SSB 3, where (SSB 3, SSB 6) can be simultaneously received by the terminal device by using a beam pair. In this case, the terminal device measures the CSI-RS 3 in the following two cases:

Case 1: Because CSI-RS-based L1-RSRP measurement is performed, the network device configures non-group-based reporting for the terminal device, and the terminal device may select to use an optimal TRP beam policy. As shown in (a) in FIG. 8, the terminal device may measure the CSI-RS 3 by using a beam 0, and the beam 0 is an optimal beam (known in FIG. 6) for the TRP 0.

Case 2: Because CSI-RS-based L1-RSRP measurement is performed, and the network device further configures group-based reporting for the terminal device, the terminal device may further select to use a beam pair policy. As shown in (b) in FIG. 8, the terminal device may measure the CSI-RS 3 by using a beam 2, and the beam 2 is a beam in the beam pair. However, the beam 2 is not optimal (known in FIG. 6) for the TRP 0.

It can be learned that, because the network device configures both the group-based reporting and the non-group-based reporting for the terminal device, when the terminal device measures the CSI-RS-based L1-RSRP measurement, the foregoing two cases occur. In other words, the terminal device cannot determine whether to use the optimal TRP beam policy or the beam pair policy.

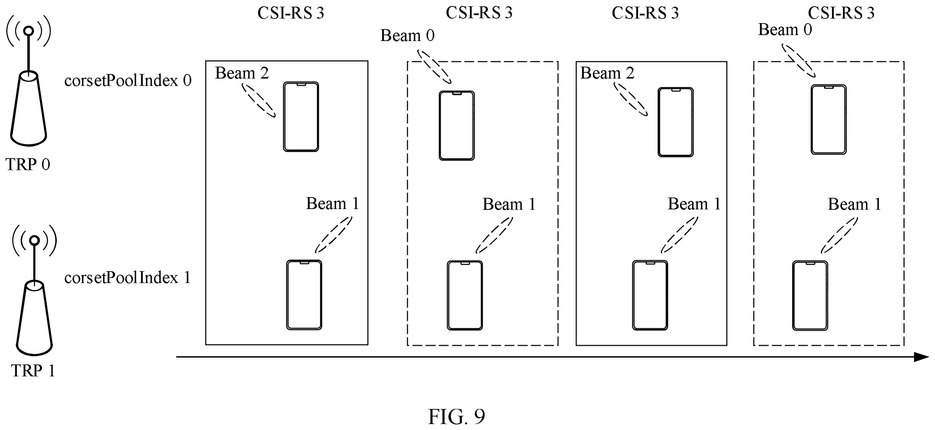

In addition, FIG. 9 is a diagram in which a terminal device performs CSI-RS 3-based measurement when a CSI-RS periodically appears. As shown in FIG. 9, when the terminal device measures a CSI-RS 3, at a moment corresponding to a solid-line box, when a TRP 0 schedules data, the terminal device uses a beam 2 in a beam pair policy, that is, the terminal device may enable a TRP 1 to schedule data, the terminal device may simultaneously receive data by using a beam 1 in the beam pair. For a moment corresponding to a dashed-line box, the terminal device selects an optimal TRP beam policy, that is, the terminal device receives data by using a beam 0. Therefore, when the TRP 1 schedules the terminal device, the terminal device cannot simultaneously receive data. In this case, the TRP 1 may select not to schedule data at this moment, because even if scheduling is performed at this moment, the terminal device cannot simultaneously receive the data.

For another example, when quality of communication between a network device and the terminal device changes, the network device may send a TCI switching command to the terminal device, to maintain an optimal receive beam of the terminal device. In a multi-panel simultaneous receiving scenario of the terminal device, the network device configures (TCI 0, TCI 1) for the terminal device to perform simultaneous receiving. When quality of communication between the terminal device and a TRP deteriorates in a moving process, the two TCIs may be switched to one TCI based on the TCI switching command.

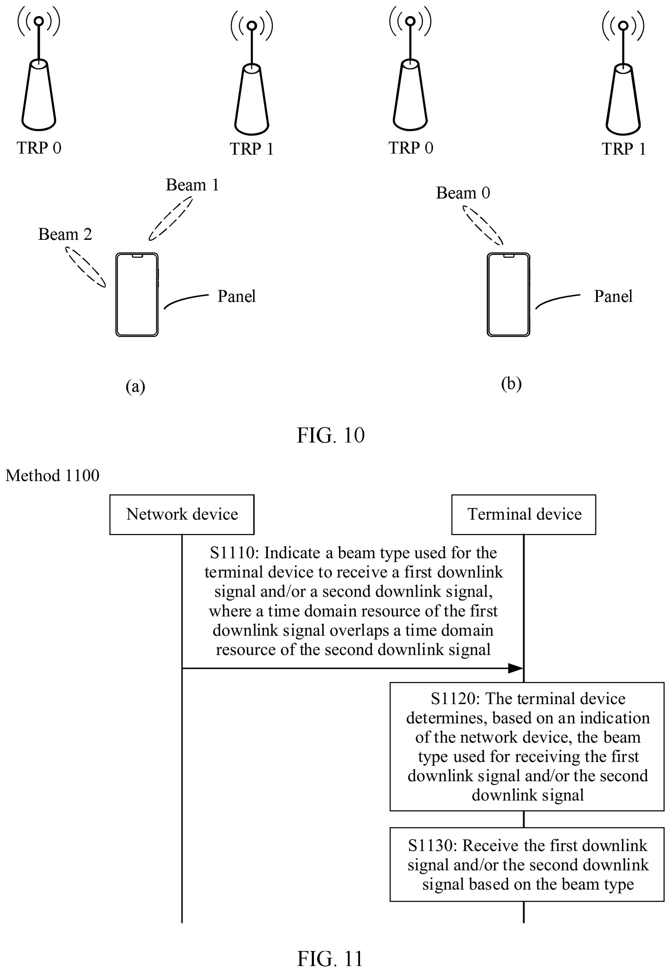

For example, FIG. 10 is a diagram in which the terminal device switches from two TCIs to one TCI. As shown in FIG. 10, when quality of communication between the terminal device and the TRP 0 deteriorates in a moving process, the network device may send, to the terminal device, a TCI switching command to switch from (TCI 0, TCI 1) to the TCI 1. In other words, in this case, the terminal device may receive only data sent by the TRP 1. TCI 0 QCL-typeD-SSB 0, TCI 1 QCL-typeD SSB 1, the SSB 0, and the SSB 1 are beam pairs that can be used for simultaneous receiving of the terminal device. After the terminal device receives the TCI switching command, the terminal device may have the following two options:

Case 1: Although the network device sends the TCI switching command to the terminal device, when performance of a receive beam used by the terminal device is relatively weak, the terminal device may perform switching based on the switching command. However, the terminal device may continue to receive data by using a beam in the beam pair. As shown in (a) in FIG. 10, the terminal device may continue to receive data by using the beam 2 in the beam pair, but the selected beam is not a beam with optimal performance for the TRP 0.

Case 2: The terminal device may switch (TCI 0, TCI 1) to the TCI 1 based on the TCI switching command sent by the network device to the terminal device. When the terminal device needs to perform beam switching, the terminal device may need to perform L1-RSRP beam sweeping once to determine a beam of the TRP 0. In this case, the terminal device needs to spend relatively long time to obtain a beam with better performance. As shown in (b) in FIG. 10, the terminal device may receive a switching command to perform switching, so that the terminal device can select the beam 0 with optimal performance for the TRP 0.

It can be learned that after the network device sends the TCI switching command to the terminal device, the foregoing two cases may occur when the terminal device receives data. To be specific, the network device cannot determine whether the terminal device uses the optimal TRP beam policy or continues to use the beam pair policy based on the switching instruction.

In conclusion, when a plurality of network devices and a plurality of panels of the terminal device perform data transmission, how to determine a beam policy of the terminal device, establish a consistent understanding between the network device and the terminal device, and determine that the UE can simultaneously receive, in different directions, downlink signals sent by the plurality of network devices is a problem that needs urgent attention at present.

In view of this, this application provides a signal transmission method. The method includes: When the first downlink signal and the second downlink signal that are sent by the network device overlap in time, the network device may indicate a beam type used for the terminal device to receive the first downlink signal and/or the second downlink signal. The beam type may be a beam type that can be used for simultaneously receiving reference signals, or the beam type may be a beam type that cannot be used for simultaneously receiving reference signals. Finally, the terminal device receives the first downlink signal and/or the second downlink signal based on the beam type indicated by the network device. According to the method provided in this application, the terminal device can simultaneously receive the first downlink signal and the second downlink signal based on the indication of the network device, to improve a data receiving throughput of the terminal device and improve performance of the terminal device.

The following describes in detail a signal transmission method provided in this application with reference to FIG. 11. FIG. 11 is an interaction diagram of an information transmission method 1100 according to an embodiment of this application. The method 1100 may be applied to the foregoing scenario, or certainly may be applied to another communication scenario. This is not limited in this embodiment of this application herein.

It should be understood that in this embodiment of this application, the method 1100 is described by using an example in which a terminal device and a network device are used to perform the steps in the method 1100. As an example rather than a limitation, the steps of the method 1100 may be alternatively performed by a chip used in a terminal device and a chip used in a network device.

As shown in FIG. 11, the method 1100 includes the following steps.

S1110: The network device indicates a beam type used for the terminal device to receive a first downlink signal and/or a second downlink signal, where a time domain resource of the first downlink signal overlaps a time domain resource of the second downlink signal. It should be understood that the first downlink signal and the second downlink signal each may have an association relationship with the beam type. Alternatively, the beam type used for the first downlink signal may be a beam type corresponding to the first downlink signal, and the beam type used for the second downlink signal may be a beam type corresponding to the second downlink signal.

S1120: The terminal device determines, based on an indication of the network device, the beam type used for receiving the first downlink signal and/or the second downlink signal.

First, it should be noted that, that the time domain resource of the first downlink signal overlaps the time domain resource of the second downlink signal may also be understood as that time for sending the first downlink signal by the network device overlaps time for sending the second downlink signal by the network device, or may be understood as that time for receiving the first downlink signal by the terminal device overlaps time for receiving the second downlink signal by the terminal device.

The first downlink signal may be a first PDSCH or a first CSI-RS, and the second downlink signal may be a second PDSCH or a second CSI-RS. Certainly, the first downlink signal and the second downlink signal may alternatively be other signals. This is not limited in this embodiment of this application.

The beam type includes a first beam type or a second beam type, the first beam type indicates: a first beam used when the terminal device can simultaneously receive a first reference signal and a second reference signal, and/or a second beam used when the terminal device can simultaneously receive the first reference signal and the second reference signal, and the second beam type indicates: a beam used when the terminal device can receive the first reference signal, or a beam used when the terminal device can receive the second reference signal.

The first beam type may also be understood as a beam used to receive the first reference signal when the terminal device can simultaneously receive the first reference signal and the second reference signal, and/or a beam used to receive the second reference signal when the terminal device can simultaneously receive the first reference signal and the second reference signal.

Optionally, the beam used when the terminal device can receive the first reference signal may include an optimal beam used when the terminal device can receive the first reference signal, or may include another beam that can be used to receive the first reference signal. This is not limited in this embodiment of this application. Similarly, the beam used when the terminal device can receive the second reference signal may also include an optimal beam used when the terminal device can receive the second reference signal, or may include another beam that can be used to receive the second reference signal. This is not limited in this embodiment of this application.

It should be understood that, in this embodiment of this application, the first reference signal and the first downlink signal have a QCL relationship, and the second reference signal and the second downlink signal have a QCL relationship.

It should be further noted that the first downlink signal is sent by a first network device, the second downlink signal is sent by a second network device, the first reference signal is sent by the first network device, the second reference signal is sent by the second network device, and a receive beam for the first downlink signal is different from a receive beam for the second downlink signal. For example, in this embodiment of this application, QCL-TypeD of the first downlink signal is different from QCL-TypeD of the second downlink signal.

The first network device may be a first TRP, and the second network device may be a second TRP.

In some embodiments, when the first downlink signal is the first PDSCH and the second downlink signal is the second PDSCH, the network device may further determine whether sending time of the first PDSCH and sending time of second DCI meet a first condition.

It should be noted that descriptions of when or after in this application do not limit a time relationship.

For example, the first PDSCH is sent in an N^{th} subframe, and the second DCI is sent in an (N-M)^{th} subframe. For example, when N is 5 and M is 2, it indicates that the first PDSCH is sent in a fifth subframe, and the second DCI is sent in a third subframe. In other words, the sending time of the second DCI is earlier than the sending time of the first PDSCH. It should be understood that the subframe herein may alternatively be another time unit, for example, an OFDM symbol, a slot, or a time unit of an absolute length.

Alternatively, the first condition is that an interval between the sending time of the first PDSCH and the sending time of the second DCI is less than, or less than or equal to a preset threshold.

It should be understood that the preset threshold may be set based on a specific situation. This is not limited in this embodiment of this application.

In a possible implementation, when the terminal device has a capability, the terminal device may report capability information of the terminal device itself to the network device, and the network device determines whether the terminal device can support the capability. When the network device determines that the terminal device supports the capability, the first beam type is equivalent to the second beam type. For example, when the network device indicates, to the terminal device, a TCI corresponding to the first downlink signal, a beam used by the terminal device to receive the first downlink signal is the same as the beam used to receive the first reference signal when the terminal device can simultaneously receive the first reference signal and the second reference signal.

When the network device determines that the terminal device does not support the capability, or the terminal device does not have the capability, the terminal device may report, to the network device, that the terminal device does not support the capability. In this case, the first beam type and the second beam type of the terminal device may be different. For example, when the network device indicates, to the terminal device, a TCI corresponding to the first downlink signal, a beam used by the terminal device to receive the first downlink signal may be the same as the beam used to receive the first reference signal when the terminal device can simultaneously receive the first reference signal and the second reference signal. The network device needs to support the beam type used for the terminal device. The terminal device needs to determine a beam type used for receiving the first downlink signal.

Therefore, in this embodiment of this application, whether the terminal device has/supports the capability may be first determined, to determine whether the network device needs to send indication information to the terminal device.

The following describes in detail a specific method for sending the indication information by the network device to the terminal device when the terminal device does not have/support the capability.

When the first downlink signal is the first PDSCH, and the second downlink signal is the first PDSCH, the second beam type is used for the terminal device to receive the first PDSCH, and the terminal device further receives the second DCI. If the second PDSCH scheduled by using the second DCI and the first PDSCH overlap in time, it indicates that the network device schedules the terminal device to simultaneously receive the first PDSCH and the second PDSCH. In addition, when the sending time of the first PDSCH and the sending time of the second DCI meet the condition, there is not enough time for scheduling the terminal device to switch from a beam of the second beam type to a beam for simultaneous receiving to receive the first PDSCH. Therefore, when the time for sending the first PDSCH by the network device overlaps time for sending the second PDSCH by the network device, and the interval between the sending time of the first PDSCH and the sending time of the second DCI meets the first condition, the network device may indicate the terminal device to receive the first PDSCH by using the beam that is used for receiving the first reference signal and that is used for simultaneously receiving the first reference signal and the second reference signal. In this case, the terminal device simultaneously receives the first PDSCH and the second PDSCH based on the indication of the network device.

The following specifically describes a specific manner in which the terminal device determines, based on the indication of the network device, the beam type used for receiving the first downlink signal and/or the second downlink signal when the first downlink signal is the first PDSCH and the second downlink signal is the second PDSCH.

In a possible implementation, the terminal device receives MAC CE signaling sent by the network device, where the MAC CE signaling indicates the beam type used for the terminal device to receive the first downlink signal and/or the second downlink signal. Then, the terminal device determines, based on the received MAC CE signaling, the beam type used for receiving the first downlink signal and/or the second downlink signal.

For example, when the MAC CE signaling indicates that the beam type used for the terminal device to receive the first downlink signal is the first beam type, a beam used by the terminal device to receive the first downlink signal in the time period is the first beam type.

Alternatively, when the MAC indicates that the beam type used for the terminal device to receive the first downlink signal is the second beam type, a beam used by the terminal device to receive the first downlink signal in the time period is the second beam type.

In this implementation, the network device may dynamically and explicitly indicate, by using the MAC CE signaling, the beam type used for receiving the first downlink signal, and the terminal device may explicitly determine, based on the indication of the network device, the beam type used for receiving the first downlink signal. Although additional signaling is introduced, signaling overheads are not high.

In another possible implementation, the network device sends first DCI to the terminal device, where the first DCI indicates a beam type used for the terminal device to receive the first downlink signal, and/or the network device sends second DCI to the terminal device, where the second DCI indicates a beam type used for the terminal device to receive the second downlink signal, and then the terminal device determines, based on the received first DCI and/or the received second DCI, the beam type used for receiving the first downlink signal and/or the second downlink signal.

For example, when the first DCI indicates that the beam type used for the terminal device to receive the first downlink signal is the first beam type, the terminal device receives the first downlink signal by using a beam of the first beam type, or when the second DCI indicates that the beam type used for the terminal device to receive the second downlink signal is the first beam type, the terminal device receives the second downlink signal by using a beam of the first beam type.

Alternatively, when the first DCI indicates that the beam type used for the terminal device to receive the first downlink signal is the second beam type, the terminal device receives the first downlink signal by using a beam of the first beam type, or when the second DCI indicates that the beam type used for the terminal device to receive the second downlink signal is the second beam type, the terminal device receives the second downlink signal by using a beam of the second beam type.

In this implementation, the network device may explicitly indicate, by using the DCI, the beam type used for receiving the first downlink signal, and the terminal device may explicitly determine, based on the indication of the network device, the beam type used for receiving the first downlink signal. Compared with an indication manner by using MAC CE signaling, in this manner, because each PDSCH may be separately indicated by using the DCI, control in this manner is more flexible, and DCI decoding at the physical layer is faster. However, because indication needs to be performed in each piece of DCI, signaling overheads are slightly higher.

In still another possible implementation, the terminal device determines, based on a first TCI configured by the network device, the beam type used for receiving the first downlink signal, and/or the terminal device determines, based on a second TCI configured by the network device, the beam type used for receiving the second downlink signal.

For example, when the first TCI indicates that the beam type used for the terminal device to receive the first downlink signal is the first beam type, the terminal device receives the first downlink signal by using a beam of the first beam type, or when the second TCI indicates that the beam type used for the terminal device to receive the second downlink signal is the first beam type, the terminal device receives the second downlink signal by using a beam of the first beam type.

Alternatively, when the first TCI indicates that the beam type used for the terminal device to receive the first downlink signal is the second beam type, the terminal device receives the first downlink signal by using a beam of the second beam type, or when the second TCI indicates that the beam type used for the terminal device to receive the second downlink signal is the second beam type, the terminal device receives the second downlink signal by using a beam of the second beam type.

It should be noted that, in this implementation, for receiving of one downlink signal, the network device configures two TCIs. A TCI-1 corresponds to the first beam type, and a TCI-2 corresponds to the second beam type. When the network device indicates to receive the downlink signal by using the TCI-1, it indicates that the first beam type is used for receiving the downlink signal. When the network device indicates to receive the downlink signal by using the TCI-2, it indicates that the second beam type is used for receiving the downlink signal.

Therefore, in this implementation, two TCIs need to be configured in RRC configuration, and a quantity of configured TCIs is doubled compared with the foregoing two manners. Therefore, overheads in the RRC configuration are relatively high. For example, for QCL-Typed-SSB 0, two TCIs need to be configured. One TCI corresponds to a beam type capable of simultaneously receiving an SSB 0, and the other TCI corresponds to an optimal beam type used for receiving the SSB 0.

In still another possible implementation, the network device sends indication information to the terminal device, where the indication information indicates a reporting type of a reference signal, the reference signal includes the first reference signal and/or the second reference signal, and the reporting type includes a first reporting type and a second reporting type.

The first reporting type indicates: The terminal device reports measurement results obtained when the first reference signal and the second reference signal can be simultaneously received, and/or reports an identifier of the first reference signal and an identifier of the second reference signal, and the second reporting type indicates: the terminal device reports a measurement result obtained when the first reference signal can be received and/or the identifier of the first reference signal, or reports a measurement result obtained when the second reference signal can be received and/or the identifier of the second reference signal.

In some implementations, the first reporting type may be group-based reporting, and the second reporting type may be non-group-based reporting. Certainly, the first reporting type and the second reporting type may alternatively be indicated in another manner. This is not limited in this embodiment of this application.

For example, when a reporting type of the first reference signal reported by the terminal device is the first reporting type, it indicates that the beam type used for the terminal device to receive the first downlink signal is the first beam type, or a reporting type of the second reference signal reported by the terminal device is the first reporting type, it indicates that the beam type used for the terminal device to receive the second downlink signal is the first beam type.

Alternatively, when a reporting type of the first downlink signal reported by the terminal device is the second reporting type, it indicates that the beam type used for the terminal device to receive the first downlink signal is the second beam type, or a reporting type of the second downlink signal reported by the terminal device is the second reporting type, it indicates that the beam type used for the terminal device to receive the second downlink signal is the second beam type.

In this implementation, the beam type used for the terminal device to receive the first downlink signal or the second downlink signal is implicitly indicated. This has little impact on the protocol, but has poor flexibility. For example, when the network device configures both the first reporting type and the second reporting type, the terminal device cannot perform determining.

In still some embodiments, the terminal device receives RRC signaling sent by the network device, where the RRC signaling indicates the beam type used for the terminal device to receive the first downlink signal and/or the second downlink signal. Then, the terminal device determines, based on the received RRC signaling, the beam type used for receiving the first downlink signal and/or the second downlink signal.

For example, when the RRC signaling indicates that the beam type used for the terminal device to receive the first downlink signal is the first beam type, a beam used by the terminal device to receive the first downlink signal in the time period is the first beam type.

Alternatively, when RRC indicates that the beam type used for the terminal device to receive the first downlink signal is the second beam type, a beam used by the terminal device to receive the first downlink signal in the time period is the second beam type.

It should be understood that an RRC message is used to configure a TCI state for the terminal device. A plurality of different coresetPoolIndex values being configured for the terminal device implicitly indicates that the terminal device is in a multi-TRP scenario, and the terminal device uses the first beam type. When the first beam type is used, the terminal device may simultaneously receive the first downlink signal and the second downlink signal.

In some other embodiments, when the first downlink signal is the first CSI-RS, and the second downlink signal is the second CSI-RS, the terminal device may further determine whether to report a first reporting type and a second reporting type of the first reference signal based on an indication of the measurement reference signal of the network device; and/or, the terminal device reports a first reporting type and a reporting type of the second reference signal.

It should be noted that the network device indicates the terminal device to measure a reference signal, and the reference signal includes the first reference signal and/or the second reference signal. The first reporting type of the reference signal may be group-based reporting, or the first reporting type of the reference signal may be non-group-based reporting. Certainly, the first reporting type of the reference signal may alternatively be another reporting type. This is not limited in this embodiment of this application.

It should be understood that, when the terminal device reports both group-based reporting and non-group-based reporting of the first reference signal, the network device cannot determine which beam is used by the terminal device to receive the first CSI-RS on a resource on which the first reference signal is located. Alternatively, when the terminal device reports both group-based reporting and non-group-based reporting of the second reference signal, the network device cannot determine which beam is used by the terminal device to receive the second CSI-RS on a resource on which the second reference signal is located. Therefore, the terminal device first needs to determine which beam type is used for receiving the first CSI-RS or the second CSI-RS.

The following describes a specific manner in which the terminal device determines, based on the indication of the network device, the beam type used for receiving the first downlink signal and the second downlink signal when the first downlink signal is the first CSI-RS and the second downlink signal is the second CSI-RS.

In a possible implementation, the terminal device receives MAC CE signaling sent by the network device, where the MAC CE signaling indicates a beam type used for the terminal device to receive the first CSI-RS and/or the second CSI-RS. Then, the terminal device determines, based on the received MAC CE signaling, the beam type used for receiving the first CSI-RS and/or the second CSI-RS.

For example, when the MAC CE signaling indicates that a beam type used for the terminal device to receive the first CSI-RS is the first beam type, a beam used by the terminal device to receive the first CSI-RS in the time period is the first beam type.

Alternatively, when the MAC CE signaling indicates that a beam type used for the terminal device to receive the first CSI-RS is the second beam type, a beam used by the terminal device to receive the first CSI-RS in the time period is the second beam type.

In another possible implementation, the network device sends indication information to the terminal device, where the indication information indicates a reporting type of a reference signal, the reference signal includes the first reference signal and/or the second reference signal, and the reporting type includes a first reporting type and a second reporting type.

In some implementations, the first reporting type may be group-based reporting, and the second reporting type may be non-group-based reporting. Certainly, the first reporting type and the second reporting type may alternatively be indicated in another manner. This is not limited in this embodiment of this application.

For example, when a reporting type of the first downlink signal reported by the terminal device is the first reporting type, it indicates that the beam type used for the terminal device to receive the first CSI-RS is the first beam type, or when a reporting type of the second CSI-RS reported by the terminal device is the first reporting type, it indicates that the beam type used for the terminal device to receive the second CSI-RS is the first beam type.

Alternatively, when a reporting type of the first CSI-RS reported by the terminal device is the second reporting type, it indicates that the beam type used for the terminal device to receive the first CSI-RS is the second beam type, or when a reporting type of the second CSI-RS reported by the terminal device is the second reporting type, it indicates that the beam type used for the terminal device to receive the second CSI-RS is the second beam type.

In some other embodiments, when the first downlink signal is the first CSI-RS, the second downlink signal is the second PDSCH; or when the first downlink signal is the first PDSCH, the second downlink signal is the second CSI-RS.

For a specific manner in which the terminal device determines, by using the first PDSCH or the second PDSCH, the beam type used for receiving the first downlink signal, refer to the foregoing descriptions. Details are not described herein again.

For a specific manner in which the terminal device determines, by using the first CSI-RS or the second CSI-RS, the beam type used for receiving the first downlink signal, refer to the foregoing descriptions. Details are not described herein again.

S1130: The terminal device receives the first downlink signal and/or the second downlink signal based on the beam type.

In this embodiment of this application, after the terminal device determines, based on the indication of the network device, the beam type used for receiving the first downlink signal and/or the second downlink signal, the terminal device determines, based on the beam type, the first beam for receiving the first downlink signal, and/or the terminal device determines, based on the beam type, the second beam for receiving the second downlink signal. Finally, the terminal device receives the first downlink signal by using the first beam, and/or receives the second downlink signal by using the second beam.

In some embodiments, when the first downlink signal is the first PDSCH, and the second downlink signal is the second PDSCH, a specific manner in which the terminal device determines, based on the beam type, the first beam for receiving the first downlink signal, and/or the terminal device determines, based on the beam type, the second beam for receiving the second downlink signal includes:

In a possible implementation, when the terminal device determines, based on the received MAC CE signaling/RRC signaling, the beam type used for receiving the first downlink signal and/or the second downlink signal, the terminal device determines, based on the beam type used for the first downlink signal and/or the second downlink signal, the first beam for receiving the first downlink signal and/or the second beam for receiving the second downlink signal.

For example, when the MAC CE signaling/RRC signaling indicates that the beam type used for receiving the first downlink signal is the first beam type, a beam used by the terminal device to receive the first downlink signal in the time period is the first beam used when the first reference signal and the second reference signal can be simultaneously received. It is assumed that the first reference signal and the second reference signal that can be simultaneously received are (SSB 0, SSB 1), and a beam pair that can be used for simultaneously receiving (SSB 0, SSB 1) is (beam 0, beam 1). In other words, the beam 0 is a beam for receiving the SSB 0 when the terminal device can simultaneously receive the SSB 0 and the SSB 1, and the beam 1 is a beam for receiving the SSB 1 when the terminal device can simultaneously receive the SSB 0 and the SSB 1. In this case, the MAC CE signaling/RRC signaling indicates that a beam that can be used for simultaneously receiving the SSB 0 and the SSB 1 is used for receiving the first PDSCH in the time period, that is, the terminal device receives the first PDSCH by using the beam 0 in the time period. When the terminal device receives the first PDSCH by using the beam 0, it indicates that the terminal device can simultaneously receive the first PDSCH and the second PDSCH.

Alternatively, when the MAC CE signaling/RRC signaling indicates that the beam type used for receiving the first downlink signal is the second beam type, a beam used for receiving the first downlink signal in the time period is a beam used when the first reference signal can be received. It is assumed that an optimal beam used by the terminal device to receive the first reference signal is a beam 2, that is, the beam 2 used by the terminal device in the time period may not be able to simultaneously receive the first PDSCH and the second PDSCH.

In another possible implementation, when the terminal device determines, based on the received first DCI and/or the received second DCI, the beam type used for receiving the first downlink signal and/or the second downlink signal, the terminal device determines, based on the beam type used for the first downlink signal and/or the second downlink signal, the first beam for receiving the first downlink signal and/or the second beam for receiving the second downlink signal.

For example, when the first DCI indicates that the beam type used for the terminal device to receive the first downlink signal is the first beam type, a beam used by the terminal device to receive the first downlink signal is the first beam used when the first reference signal and the second reference signal can be simultaneously received. It is assumed that the first reference signal and the second reference signal that can be simultaneously received are (SSB 0, SSB 1), and a beam pair that can be used for simultaneously receiving (SSB 0, SSB 1) is (beam 0, beam 1). In this case, the first DCI indicates to receive the first PDSCH by using the first beam that can be used for simultaneously receiving the SSB 0 and the SSB 1, and the terminal device receives the first PDSCH by using the beam 0, and/or when the second DCI indicates that the beam type used for the terminal device to receive the second downlink signal is the first beam type, a beam used by the terminal device to receive the second downlink signal is the second beam used when the first reference signal and the second reference signal can be simultaneously received. It is assumed that the first reference signal and the second reference signal that can be simultaneously received are (SSB 0, SSB 1), and a beam pair that can be used for simultaneously receiving (SSB 0, SSB 1) is (beam 0, beam 1). In this case, the second DCI indicates to receive the second PDSCH by using the second beam that can be used for simultaneously receiving the SSB 0 and the SSB 1, and the terminal device receives the second PDSCH by using the beam 1.

Alternatively, when the first DCI indicates that the beam type used for the terminal device to receive the first downlink signal is the second beam type, a beam used by the terminal device to receive the first downlink signal is a beam used when the first reference signal can be received. It is assumed that an optimal beam used by the terminal device to receive the first reference signal is a beam 2, that is, the beam 2 used by the terminal device in the time period may not be able to simultaneously receive the first PDSCH and the second PDSCH; and/or when the second DCI indicates that the beam type used for the terminal device to receive the second downlink signal is the second beam type, a beam used by the terminal device to receive the second downlink signal is a beam used when the second reference signal can be received. It is assumed that an optimal beam used by the terminal device to receive the second reference signal is a beam 3, that is, the beam 3 used by the terminal device in the time period may not be able to simultaneously receive the first PDSCH and the second PDSCH.

In still another possible implementation, when the terminal device determines, based on the first TCI and/or the second TCI configured by the network device, the beam type used for receiving the first downlink signal and/or the second downlink signal, the terminal device determines, based on the beam type used for the first downlink signal and/or the second downlink signal, the first beam for receiving the first downlink signal and/or the second beam for receiving the second downlink signal.

For example, when the first TCI indicates that the beam type used for the terminal device to receive the first downlink signal is the first beam type, a beam used by the terminal device to receive the first downlink signal is the first beam used when the first reference signal and the second reference signal can be simultaneously received. It is assumed that the first reference signal and the second reference signal that can be simultaneously received are (SSB 0, SSB 1), and a beam pair that can be used for simultaneously receiving (SSB 0, SSB 1) is (beam 0, beam 1). In this case, the first TCI indicates to receive the first PDSCH by using the first beam that can be used for simultaneously receiving the SSB 0 and the SSB 1, and the terminal device receives the first PDSCH by using the beam 0, and/or when the second TCI indicates that the beam type used for the terminal device to receive the second downlink signal is the first beam type, a beam used by the terminal device to receive the second downlink signal is the second beam used when the first reference signal and the second reference signal can be simultaneously received. In this case, the terminal device receives the second PDSCH by using the beam 1.

Alternatively, when the first TCI indicates that the beam type used for the terminal device to receive the first downlink signal is the second beam type, a beam used by the terminal device to receive the first downlink signal is a beam used when the first reference signal can be received. It is assumed that an optimal beam used by the terminal device to receive the first reference signal is a beam 2, that is, the beam 2 used by the terminal device in the time period may not be able to simultaneously receive the first PDSCH and the second PDSCH; and/or when the second TCI indicates that the beam type used for the terminal device to receive the second downlink signal is the second beam type, a beam used by the terminal device to receive the second downlink signal is a beam used when the second reference signal can be received. It is assumed that an optimal beam used by the terminal device to receive the second reference signal is a beam 3, that is, the beam 3 used by the terminal device may not be able to simultaneously receive the first PDSCH and the second PDSCH.

In still another possible implementation, when the terminal device determines, based on the reporting type of the reported reference signal, the beam type used for receiving the first downlink signal and/or the second downlink signal, the terminal device determines, based on the beam type used for the first downlink signal and/or the second downlink signal, the first beam for receiving the first downlink signal and/or the second beam for receiving the second downlink signal.

For example, when a reporting type of the first reference signal reported by the terminal device is group-based, the beam type used for the terminal device to receive the first downlink signal is the first beam type, a beam used by the terminal device to receive the first downlink signal is the first beam used when the first reference signal and the second reference signal can be simultaneously received. It is assumed that the first reference signal and the second reference signal that can be simultaneously received are (SSB 0, SSB 1), and a beam pair that can be used for simultaneously receiving (SSB 0, SSB 1) is (beam 0, beam 1). In this case, group-based indicates to receive the first PDSCH by using the first beam that can be used for simultaneously receiving the SSB 0 and the SSB 1, and the terminal device receives the first PDSCH by using the beam 0, and/or when a reporting type of the second reference signal reported by the terminal device is that group-based indicates that the beam type used for the terminal device to receive the second downlink signal is the first beam type, a beam used by the terminal device to receive the first downlink signal is the second beam used when the first reference signal and the second reference signal can be simultaneously received. It is assumed that the first reference signal and the second reference signal that can be simultaneously received are (SSB 0, SSB 1), and a beam pair that can be used for simultaneously receiving (SSB 0, SSB 1) is (beam 0, beam 1). In this case, group-based indicates to receive the second PDSCH by using the second beam that can be used for simultaneously receiving the SSB 0 and the SSB 1, and the terminal device receives the second PDSCH by using the beam 1.

Alternatively, when the reporting type of the first reference signal reported by the terminal device is that non-group-based indicates that the beam type used for the terminal device to receive the first downlink signal is the second beam type, a beam used by the terminal device to receive the first downlink signal is a beam used when the first reference signal can be received. It is assumed that an optimal beam used by the terminal device to receive the first reference signal is a beam 2, that is, the beam 2 used by the terminal device in the time period may not be able to simultaneously receive the first PDSCH and the second PDSCH; and/or when the reporting type of the second reference signal reported by the terminal device is that non-group-based indicates that the beam type used for the terminal device to receive the first downlink signal is the second beam type, a beam used by the terminal device to receive the second downlink signal is a beam used when the second reference signal can be received. It is assumed that an optimal beam used by the terminal device to receive the second reference signal is a beam 3, that is, the beam 3 used by the terminal device in the time period may not be able to simultaneously receive the first PDSCH and the second PDSCH.

In still another possible implementation, when the terminal device determines, based on the received RRC signaling, the beam type used for receiving the first downlink signal and/or the second downlink signal, the terminal device determines, based on the beam type used for the first downlink signal and/or the second downlink signal, the first beam for receiving the first downlink signal and/or the second beam for receiving the second downlink signal.

For example, when the RRC signaling indicates that the beam type used for receiving the first downlink signal is the first beam type, a beam used by the terminal device to receive the first downlink signal in the time period is the first beam used when the first reference signal and the second reference signal can be simultaneously received. It is assumed that the first reference signal and the second reference signal that can be simultaneously received are (SSB 0, SSB 1), and a beam pair that can be used for simultaneously receiving (SSB 0, SSB 1) is (beam 0, beam 1). In other words, the beam 0 is a beam for receiving the SSB 0 when the terminal device can simultaneously receive the SSB 0 and the SSB 1, and the beam 1 is a beam for receiving the SSB 1 when the terminal device can simultaneously receive the SSB 0 and the SSB 1. In this case, the RRC signaling indicates that the beam that can be used for simultaneously receiving the SSB 0 and the SSB 1 is used for receiving the first PDSCH in the time period, that is, the terminal device receives the first PDSCH by using the beam 0 in the time period. When the terminal device receives the first PDSCH by using the beam 0, it indicates that the terminal device can simultaneously receive the first PDSCH and the second PDSCH.

Alternatively, when the RRC signaling indicates that the beam type used for receiving the first downlink signal is the second beam type, a beam used for receiving the first downlink signal in the time period is a beam used when the first reference signal can be received. It is assumed that an optimal beam used by the terminal device to receive the first reference signal is a beam 2, that is, the beam 2 used by the terminal device in the time period may not be able to simultaneously receive the first PDSCH and the second PDSCH.

The foregoing implementation is a specific manner in which when the first downlink signal is the first PDSCH, and the second downlink signal is the second PDSCH, the terminal device determines, based on the beam type, the first beam for receiving the first downlink signal, and/or the terminal device determines, based on the beam type, the second beam for receiving the second downlink signal.

It can be learned that when the network device indicates: The terminal device may receive the first PDSCH by using the first beam for simultaneously receiving the first reference signal and the second reference signal, or receive the second PDSCH by using the second beam for simultaneously receiving the first reference signal and the second reference signal, it indicates that the terminal device can simultaneously receive the first PDSCH and the second PDSCH. For example, when the network device indicates that the first beam type is used for the terminal device to receive the first PDSCH, the terminal device receives the first PDSCH by using the beam 0; or when the network device indicates that the first beam type is used for the terminal device to receive the second PDSCH, the terminal device receives the second PDSCH by using the beam 1. In this case, the terminal device can simultaneously receive the first PDSCH and the second PDSCH.

When the network device indicates: The terminal device may receive the first PDSCH by using a beam for receiving the first reference signal, or receive the second PDSCH by using a beam for receiving the second reference signal, it indicates that the terminal device cannot simultaneously receive the first PDSCH and the second PDSCH. For example, when the MAC CE indicates the terminal device to receive the first PDSCH by using the second beam type, the terminal device receives the first PDSCH by using the beam 2; or when the MAC CE indicates the terminal device to receive the second PDSCH by using the second beam type, the terminal device receives the second PDSCH by using the beam 3. In this case, the terminal device cannot simultaneously receive the first PDSCH and the second PDSCH. Whether the terminal device finally receives the first PDSCH or the second PDSCH may be set based on a specific situation. This is not limited in this embodiment of this application.

In other words, when the second beam type is used for the terminal device to receive the first downlink signal or whether the first beam type is used for the terminal device to receive the first downlink signal cannot be determined, the terminal device does not expect the first downlink signal and the second downlink signal that overlap in receiving time. Optionally, a QCL relationship between the first downlink signal and the second downlink signal is different. Optionally, a time interval between the first DCI and the second PDSCH is less than a preset threshold, or a time interval between the second DCI and the first PDSCH is less than a preset threshold.

Alternatively, the network device does not allow scheduling of the second downlink signal that overlaps the first downlink signal in time; or the second beam type is used for the terminal device to receive the first downlink signal, and the terminal device does not expect the first DCI and the second PDSCH to be less than or equal to the preset threshold; or the second beam type is used for the terminal device to receive the first downlink signal, and the network device does not allow the second DCI and the first PDSCH to be less than or equal to the preset threshold.

Alternatively, when the second beam type is used for the terminal device to receive the second downlink signal, the terminal device does not expect to schedule the first downlink signal that overlaps the second downlink signal in time, or the network device does not allow to schedule the first downlink signal that overlaps the second downlink signal in time; or when the second beam type is used for the terminal device to receive the second downlink signal, the terminal device does not expect the first DCI and the second PDSCH to be less than or equal to the preset threshold; or when the second beam type is used for the terminal device to receive the first downlink signal, it indicates that the network device does not allow the first DCI and the second PDSCH to be less than or equal to the preset threshold.

In some other embodiments, when the first downlink signal is the first CSI-RS, and the second downlink signal is the second CSI-RS, a specific manner in which the terminal device determines, based on the beam type, the first beam for receiving the first downlink signal, and/or the terminal device determines, based on the beam type, the second beam for receiving the second downlink signal includes:

In a possible implementation, when the terminal device determines, based on the received MAC CE signaling, the beam type used for receiving the first downlink signal and/or the second downlink signal, the terminal device determines, based on the beam type used for the first downlink signal and/or the second downlink signal, the first beam for receiving the first downlink signal and/or the second beam for receiving the second downlink signal.

For example, when the MAC CE indicates that the beam type used for receiving the first CSI-RS is the first beam type, a beam used by the terminal device to receive the first CSI-RS in the time period is the first beam used when the first reference signal and the second reference signal can be simultaneously received. It is assumed that the first reference signal and the second reference signal that can be simultaneously received are (SSB 0, SSB 1), and a beam pair that can be used for simultaneously receiving (SSB 0, SSB 1) is (beam 0, beam 1). In this case, the MAC CE signaling indicates that the first beam that can be used for simultaneously receiving the SSB 0 and the SSB 1 is used for receiving the first CSI-RS in the time period, that is, the terminal device receives the first CSI-RS by using the beam 0 in the time period.

When the MAC CE indicates that the beam type used for receiving the second CSI-RS is the first beam type, a beam used by the terminal device to receive the second CSI-RS in the time period is the second beam used when the first reference signal and the second reference signal can be simultaneously received. In other words, the terminal device receives the second CSI-RS by using the beam 1 in the time period.

Alternatively, when the MAC indicates that the beam type used for receiving the first CSI-RS is the second beam type, a beam used for receiving the first CSI-RS in the time period is a beam used when the first reference signal can be received. It is assumed that an optimal beam used by the terminal device to receive the first reference signal is the beam 2, that is, the beam 2 used by the terminal device in the time period cannot simultaneously receive the first CSI-RS and the second CSI-RS.

When the MAC indicates that the beam type used for receiving the second CSI-RS is the second beam type, a beam used for receiving the second CSI-RS in the time period is a beam used when the first reference signal can be received. It is assumed that an optimal beam used by the terminal device to receive the first reference signal is a beam 3, that is, the beam 3 used by the terminal device in the time period may not be able to simultaneously receive the first CSI-RS and the second CSI-RS.

In another possible implementation, when the terminal device determines, based on the reporting type of the reported reference signal, the beam type used for receiving the first downlink signal and/or the second downlink signal, the terminal device determines, based on the beam type used for the first downlink signal and/or the second downlink signal, the first beam for receiving the first downlink signal and/or the second beam for receiving the second downlink signal.

For example, when a reporting type of the first reference signal reported by the terminal device is that group-based indicates that the beam type used for the terminal device to receive the first downlink signal is the first beam type, a beam used by the terminal device to receive the first downlink signal is the first beam used when the first reference signal and the second reference signal can be simultaneously received. It is assumed that the first reference signal and the second reference signal that can be simultaneously received are (SSB 0, SSB 1), and a beam pair that can be used for simultaneously receiving (SSB 0, SSB 1) is (beam 0, beam 1). In this case, group-based indicates to receive the first CSI-RS by using the first beam that can be used for simultaneously receiving the SSB 0 and the SSB 1, and the terminal device receives the first CSI-RS by using the beam 0, and/or when a reporting type of the second reference signal reported by the terminal device is that group-based indicates that the beam type used for the terminal device to receive the first downlink signal is the first beam type, a beam used by the terminal device to receive the first downlink signal is the second beam used when the first reference signal and the second reference signal can be simultaneously received. It is assumed that the first reference signal and the second reference signal that can be simultaneously received are (SSB 0, SSB 1), and a beam pair that can be used for simultaneously receiving (SSB 0, SSB 1) is (beam 0, beam 1). In this case, group-based indicates to receive the second CSI-RS by using the second beam that can be used for simultaneously receiving the SSB 0 and the SSB 1, and the terminal device receives the second CSI-RS by using the beam 1.

Alternatively, when the reporting type of the first reference signal reported by the terminal device is that non-group-based indicates that the beam type used for the terminal device to receive the first downlink signal is the second beam type, a beam used by the terminal device to receive the first downlink signal is a beam used when the first reference signal can be received. It is assumed that an optimal beam used by the terminal device to receive the first reference signal is a beam 2, that is, the beam 2 used by the terminal device in the time period cannot simultaneously receive the first CSI-RS and the second CSI-RS; and/or when the reporting type of the second reference signal reported by the terminal device is that non-group-based indicates that the beam type used for the terminal device to receive the first downlink signal is the second beam type, a beam used by the terminal device to receive the second downlink signal is a beam used when the second reference signal can be received. It is assumed that an optimal beam used by the terminal device to receive the second reference signal is a beam 3, that is, the beam 3 used by the terminal device in the time period cannot simultaneously receive the first CSI-RS and the second CSI-RS.

The foregoing implementation is a specific manner in which when the first downlink signal is the first CSI-RS and the second downlink signal is the second CSI-RS, the terminal device determines, based on the beam type, the first beam for receiving the first downlink signal, and/or the terminal device determines, based on the beam type, the second beam for receiving the second downlink signal.

It can be learned that when the network device indicates: The terminal device may receive the first CSI-RS by using the first beam for simultaneously receiving the first reference signal and the second reference signal, and receive the second CSI-RS by using the second beam for simultaneously receiving the first reference signal and the second reference signal, it indicates that the terminal device can simultaneously receive the first CSI-RS and the second CSI-RS. For example, when the network device indicates the terminal device to receive the first CSI-RS by using the beam 0 and receive the second CSI-RS by using the beam 1, the terminal device can simultaneously receive the first CSI-RS and the second CSI-RS.

When the network device indicates: The terminal device may receive the first CSI-RS by using a beam for receiving the first reference signal, or receive the second CSI-RS by using a beam for receiving the second reference signal, it indicates that the terminal device cannot simultaneously receive the first CSI-RS and the second CSI-RS. For example, when the MAC CE indicates the terminal device to receive the first CSI-RS by using the beam 2 or receive the second CSI-RS by using the beam 3, the terminal device cannot simultaneously receive the first CSI-RS and the second CSI-RS. Whether the terminal device finally receives the first CSI-RS or the second CSI-RS may be set based on a specific situation. This is not limited in this embodiment of this application.

In other words, when the terminal device determines that the first CSI-RS and the second CSI-RS cannot be simultaneously received or cannot determine whether the first CSI-RS and the second CSI-RS can be simultaneously received, it indicates that the terminal device can measure only one of the CSI-RSs.

In other words, when the terminal device determines that the first CSI-RS and the second CSI-RS cannot be simultaneously received or cannot determine whether the first CSI-RS and the second CSI-RS can be simultaneously received, the terminal device does not expect/the network does not allow configuration of overlapping CSI-RSs.

In other words, when the terminal device determines that the first CSI-RS and the second CSI-RS cannot be simultaneously received or cannot determine whether the first CSI-RS and the second CSI-RS can be simultaneously received, the terminal device does not expect/the network does not allow the CSI-RS to be configured with both the first reporting type and the second reporting type, for example, the first reporting type may be group-based reporting, and the second reporting type may be non-group-based reporting.

In some other embodiments, when the first downlink signal is the first CSI-RS, the second downlink signal is the second PDSCH; or when the first downlink signal is the first PDSCH, the second downlink signal is the second CSI-RS.

It should be noted that, when the first beam type is used for the first PDSCH or the second PDSCH, and the first beam type is used for the first CSI-RS or the second CSI-RS, it indicates that the terminal device can simultaneously receive the first CSI-RS and the second PDSCH, or the terminal device can simultaneously receive the second CSI-RS and the first PDSCH.

It should be further noted that, when the second beam type is used for the first PDSCH or the first CSI-RS, it indicates that the terminal device cannot simultaneously receive the first PDSCH and the first CSI-RS; or the second beam type is used for the second PDSCH or the second CSI-RS, it indicates that the terminal device cannot simultaneously receive the second PDSCH and the second CSI-RS. Whether the terminal device finally receives the PDSCH or the CSI-RS may be set based on a specific situation. This is not limited in this embodiment of this application.

In some embodiments, the first PDSCH and the second PDSCH overlap (partially overlap or completely overlap) in time, and the first PDSCH and the second PDSCH are received by using a beam that can be used for simultaneously receiving the first PDSCH and the second PDSCH. When the first CSI-RS and the first PDSCH overlap (partially overlap or completely overlap) in time, and have a same QCL (a same QCL-TypeD indication), the first beam type is used for the terminal device to receive the first CSI-RS, indicating that the terminal device can simultaneously receive the first CSI-RS and the second PDSCH.

Alternatively, in some other embodiments, the first PDSCH and the second PDSCH overlap (partially overlap or completely overlap) in time, and the first PDSCH and the second PDSCH are received by using a beam that can be used for simultaneously receiving the first PDSCH and the second PDSCH. When the second CSI-RS and the second PDSCH overlap (partially overlap or completely overlap) in time, and have a same QCL (a same QCL-TypeD indication), the first beam type is used for the terminal device to receive the second CSI-RS, indicating that the terminal device can simultaneously receive the second CSI-RS and the second PDSCH.

In other words, when the terminal device determines that the first CSI-RS and the second PDSCH cannot be simultaneously received or cannot determine whether the first CSI-RS and the second PDSCH can be simultaneously received, it indicates that the terminal device can measure only the first CSI-RS.

In other words, when the terminal device determines that the first CSI-RS and the second CSI-RS cannot be simultaneously received or cannot determine whether the first CSI-RS and the second CSI-RS can be simultaneously received, the terminal device does not expect/the network does not allow scheduling of the overlapping second PDSCH.

Similarly, when the terminal device determines that the first PDSCH and the second CSI-RS cannot be simultaneously received or cannot determine whether the first PDSCH and the second CSI-RS can be simultaneously received, it indicates that the terminal device can measure only the first CSI-RS.

In other words, when the terminal device determines that the first PDSCH and the second CSI-RSS cannot be simultaneously received or cannot determine whether the first PDSCH and the second CSI-RS can be simultaneously received, the terminal device does not expect/the network does not allow scheduling of the overlapping second PDSCH.

Alternatively, in some other embodiments, when the first CSI-RS and the second PDSCH overlap in time, if only group-based reporting is configured for the first CSI-RS, the first beam type is used for the terminal device to simultaneously receive the first CSI-RS and the second PDSCH. If both group-based reporting and non-group-based reporting are configured for the first CSI-RS, a beam type used for the terminal device to receive the CSI-RS cannot be determined. Therefore, the terminal device cannot simultaneously receive the first CSI-RS and the second PDSCH. In this case, the terminal device measures only the first CSI-RS, or the terminal device does not expect/the network does not allow scheduling of the overlapping second PDSCH.

In other words, the network device determines whether the second PDSCH that overlaps the first CSI-RS in time can be scheduled. If only group-based reporting is configured for the first CSI-RS, the first beam type is used for the terminal device to simultaneously receive the first CSI-RS and the second PDSCH, and the network device can schedule the second PDSCH. If both group-based reporting and non-group-based reporting are configured for the first CSI-RS, a beam type used for the terminal device to receive the CSI-RS cannot be determined. Therefore, the terminal device cannot simultaneously receive the first CSI-RS and the second PDSCH. In this case, the terminal device measures only the first CSI-RS, or the terminal device does not expect/the network does not allow scheduling of the overlapping second PDSCH.

According to the signal transmission method provided in this embodiment of this application, when the first downlink signal and the second downlink signal that are sent by the network device overlap in time, the network device may indicate a beam type used for the terminal device to receive the first downlink signal and/or the second downlink signal. The beam type may be a beam type that can be used for simultaneously receiving reference signals, or the beam type may be a beam type that cannot be used for simultaneously receiving reference signals. Finally, the terminal device receives the first downlink signal and/or the second downlink signal based on the beam type indicated by the network device. According to the method provided in this application, the terminal device can simultaneously receive the first downlink signal and the second downlink signal based on the indication of the network device, to improve a data receiving throughput of the terminal device and improve performance of the terminal device.

An embodiment of this application further provides another signal transmission method. After a network device sends a TCI switching instruction to a terminal device, the network device indicates a beam type used for the terminal device to receive a first downlink signal based on a first TCI, or the network device indicates a beam type used for the terminal device to receive a second downlink signal based on a second TCI, where the beam type includes a first beam type and a second beam type, the first beam type indicates: a first beam in a beam pair through which a first reference signal and a second reference signal can be simultaneously received, or a second beam in the beam pair through which the first reference signal and the second reference signal can be simultaneously received, and the second beam type indicates: a beam that can be used for receiving the first reference signal, or a beam that can be used for receiving the second reference signal; and based on an indication of the network device, the terminal device receives the first downlink signal based on the first TCI, or receives the second downlink signal based on the second TCI. In the method, the terminal device receives data based on the indication of the network device, and the network device and the terminal device can establish a consistent understanding.

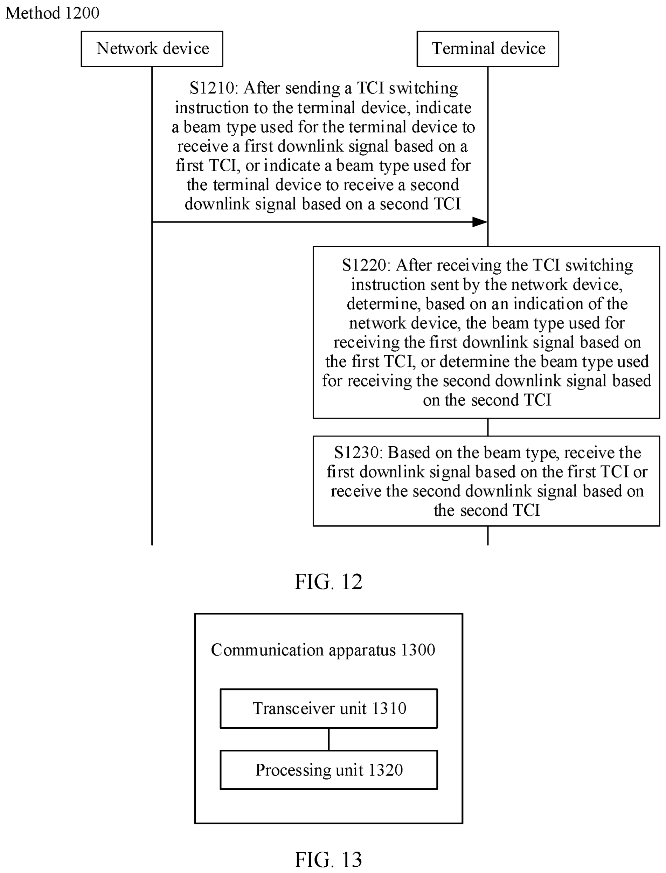

The following describes in detail a signal transmission method provided in this application with reference to FIG. 12. FIG. 12 is an interaction diagram of an information transmission method 1200 according to an embodiment of this application. The method 1200 may be applied to the foregoing scenario, or certainly may be applied to another communication scenario. This is not limited in this embodiment of this application herein.

It should be understood that in this embodiment of this application, the method 1200 is described by using an example in which a terminal device and a network device are used to perform the steps in the method 1200. As an example rather than a limitation, the steps of the method 1200 may be alternatively performed by a chip used in a terminal device and a chip used in a network device.

As shown in FIG. 12, the method 1200 includes the following steps.

S1210: After the network device sends a TCI switching instruction to the terminal device, the network device indicates a beam type used for the terminal device to receive a first downlink signal based on a first TCI, or the network device indicates a beam type used for the terminal device to receive a second downlink signal based on a second TCI.

S1220: After the terminal device receives the TCI switching instruction sent by the network device, the terminal device determines, based on an indication of the network device, the beam type used for receiving the first downlink signal based on the first TCI, or determines the beam type used for receiving the second downlink signal based on the second TCI.

In a possible implementation, the terminal device receives MAC CE signaling/RRC signaling sent by the network device, where the MAC CE signaling/RRC signaling indicates the beam type used for the terminal device to receive the first downlink signal based on the first TCI or the beam type used for the terminal device to receive the second downlink signal based on the second TCI. Then, the terminal device determines, based on the received MAC CE signaling, the beam type used for receiving the first downlink signal based on the first TCI or the beam type used for receiving the second downlink signal based on the second TCI.

For example, when the MAC CE signaling/RRC signaling indicates that the beam type used for the terminal device to receive the first downlink signal based on the first TCI is a first beam type, a beam used by the terminal device to receive the first downlink signal based on the first TCI is of the first beam type; or when the MAC CE signaling/RRC signaling indicates that the beam type used for the terminal device to receive the second downlink signal based on the second TCI is a first beam type, a beam used by the terminal device to receive the second downlink signal based on the second TCI is of the first beam type.

Alternatively, when the MAC CE signaling/RRC signaling indicates that the beam type used for the terminal device to receive the first downlink signal based on the first TCI is a second beam type, a beam used by the terminal device to receive the first downlink signal based on the first TCI is of the second beam type; or when the MAC CE signaling/RRC signaling indicates that the beam type used for the terminal device to receive the second downlink signal based on the second TCI is a second beam type, a beam used by the terminal device to receive the second downlink signal based on the second TCI is of the second beam type.

In another possible implementation, the network device sends first DCI to the terminal device, where the first DCI indicates a beam type used for the terminal device to receive the first downlink signal based on the first TCI, and/or the network device sends second DCI to the terminal device, where the second DCI indicates a beam type used for the terminal device to receive the second downlink signal based on the second TCI, and then the terminal device determines, based on the received first DCI and/or the received second DCI, the beam type used for receiving the first downlink signal based on the first TCI or the beam type used for receiving the second downlink signal based on the second TCI.

For example, when the first DCI indicates that the beam type used for the terminal device to receive the first downlink signal based on the first TCI is the first beam type, the terminal device receives the first downlink signal by using a beam of the first beam type based on the first TCI; or when the second DCI indicates that the beam type used for the terminal device to receive the second downlink signal based on the second TCI is the first beam type, the terminal device receives the second downlink signal by using a beam of the first beam type based on the second TCI.

Alternatively, when the first DCI indicates that the beam type used for the terminal device to receive the first downlink signal based on the first TCI is the second beam type, the terminal device receives the first downlink signal by using a beam of the second beam type based on the first TCI; or when the second DCI indicates that the beam type used for the terminal device to receive the second downlink signal based on the second TCI is the second beam type, the terminal device receives the second downlink signal by using a beam of the second beam type based on the second TCI.

In still another possible implementation, the terminal device determines, based on the first TCI configured by the network device, the beam type used for receiving the first downlink signal based on the first TCI; or the terminal device determines, based on the second TCI configured by the network device, the beam type used for receiving the first downlink signal based on the first TCI.

For example, when the first TCI indicates that the beam type used for the terminal device to receive the first downlink signal based on the first TCI is the first beam type, the terminal device receives the first downlink signal by using a beam of the first beam type based on the first TCI; or when the second TCI indicates that the beam type used for the terminal device to receive the second downlink signal based on the second TCI is the first beam type, the terminal device receives the second downlink signal by using a beam of the first beam type.

Alternatively, when the first TCI indicates that the beam type used for the terminal device to receive the first downlink signal based on the first TCI is the second beam type, the terminal device receives the first downlink signal by using a beam of the second beam type based on the first TCI; or when the second TCI indicates that the beam type used for the terminal device to receive the second downlink signal based on the second TCI is the second beam type, the terminal device receives the second downlink signal by using a beam of the second beam type.

In still another possible implementation, the network device sends indication information to the terminal device, where the indication information indicates a reporting type of a reference signal, the reference signal includes a first reference signal and/or a second reference signal, and the reporting type includes a first reporting type or a second reporting type.

In some implementations, the first reporting type may be group-based reporting, and the second reporting type may be non-group-based reporting. Certainly, the reporting type may alternatively be in another form. This is not limited in this embodiment of this application.

For example, when the reporting type of the first reference signal reported by the terminal device is group-based reporting, it indicates that the beam type used for the terminal device to receive the first downlink signal based on the first TCI is the first beam type; or when the reporting type of the second reference signal reported by the terminal device is group-based reporting, it indicates that the beam type used for the terminal device to receive the second downlink signal based on the second TCI is the first beam type.

Alternatively, when the reporting type of the first downlink signal reported by the terminal device is non-group-based reporting, it indicates that the beam type used for the terminal device to receive the first downlink signal based on the first TCI is the second beam type; or when the reporting type of the second downlink signal reported by the terminal device is non-group-based reporting, it indicates that the beam type used for the terminal device to receive the second downlink signal based on the second TCI is the second beam type.

S1230: Based on the beam type, the terminal device receives the first downlink signal based on the first TCI or receives the second downlink signal based on the second TCI.

In a possible implementation, when the terminal device determines, based on the received MAC CE signaling/RRC signaling, the beam type used for receiving the first downlink signal based on the first TCI or the beam type used for the second downlink signal based on the second TCI, the terminal device determines, based on the beam type used for receiving the first downlink signal based on the first TCI or the beam type used for receiving the second downlink signal based on the second TCI, a first beam for receiving the first downlink signal based on the first TCI, or determines a second beam for receiving the second downlink signal based on the second TCI.

For example, when the MAC CE signaling/RRC signaling indicates that the beam type used for receiving the first downlink signal based on the first TCI is the first beam type, a beam used by the terminal device to receive the first downlink signal in the time period based on the first TCI is the first beam used when the first reference signal and the second reference signal can be simultaneously received. It is assumed that the first reference signal and the second reference signal that can be simultaneously received are (SSB 0, SSB 1), and a beam pair that can be used for simultaneously receiving (SSB 0, SSB 1) is (beam 0, beam 1), that is, the terminal device receives the first downlink signal in the time period by using the beam 0; or when the MAC CE signaling/RRC signaling indicates that the beam type used for receiving the second downlink signal based on the second TCI is the first beam type, a beam used by the terminal device to receive the second downlink signal in the time period based on the second TCI is the second beam used when the first reference signal and the second reference signal can be simultaneously received. In other words, the terminal device receives the second downlink signal by using the beam 1 in the time period.

Alternatively, when the MAC CE signaling/RRC signaling indicates that a beam used for receiving the first downlink signal based on the first TCI is of the second type, the beam used by the terminal device to receive the first downlink signal based on the first TCI in the time period is a beam that can be used for receiving the first reference signal. It is assumed that the beam that can be used for receiving the first reference signal is a beam 2, the terminal device receives the first downlink signal by using the beam 2 based on the first TCI. Alternatively, when the MAC CE signaling/RRC signaling indicates that a beam used for receiving the second downlink signal based on the second TCI is of the second type, the beam used by the terminal device to receive the second downlink signal in the time period based on the second TCI is a beam that can be used for receiving the second reference signal. It is assumed that the beam that can be used for receiving the second reference signal is a beam 3, the terminal device receives the second downlink signal by using the beam 3 based on the second TCI.

In another possible implementation, when the terminal device determines, based on the received first DCI and/or the received second DCI, the beam type used for receiving the first downlink signal based on the first TCI or the beam type used for the second downlink signal based on the second TCI, the terminal device determines, based on the beam type used for the first downlink signal and/or the beam type used for the second downlink signal, the first beam for receiving the first downlink signal based on the first TCI, or determines the second beam for receiving the second downlink signal based on the second TCI.

For example, when the first DCI indicates that the beam type used for the terminal device to receive the first downlink signal based on the first TCI is the first beam type, a beam used by the terminal device to receive the first downlink signal based on the first TCI is the first beam used when the first reference signal and the second reference signal can be simultaneously received. It is assumed that the first reference signal and the second reference signal that can be simultaneously received are (SSB 0, SSB 1), and a beam pair that can be used for simultaneously receiving (SSB 0, SSB 1) is (beam 0, beam 1). In this case, the terminal device receives the first downlink signal by using the beam 0 based on the first TCI; and/or when the second DCI indicates that the beam type used for the terminal device to receive the second downlink signal based on the second TCI is the first beam type, a beam used by the terminal device to receive the second downlink signal based on the second TCI is the second beam used when the first reference signal and the second reference signal can be simultaneously received. It is assumed that the first reference signal and the second reference signal that can be simultaneously received are (SSB 0, SSB 1), and a beam pair that can be used for simultaneously receiving (SSB 0, SSB 1) is (beam 0, beam 1). In this case, the terminal device receives the first downlink signal by using the beam 1 based on the first TCI.

Alternatively, when the first DCI indicates that the beam type used for the terminal device to receive the first downlink signal based on the first TCI is the second beam type, a beam used by the terminal device to receive the first downlink signal is a beam used when the first reference signal can be received. It is assumed that an optimal beam used by the terminal device to receive the first reference signal is a beam 2, that is, the beam 2 used by the terminal device cannot simultaneously receive the first downlink signal and the second downlink signal; and/or when the second DCI indicates that the beam type used for the terminal device to receive the second downlink signal based on the second TCI is the second beam type, a beam used by the terminal device to receive the second downlink signal is a beam used when the second reference signal can be received. It is assumed that an optimal beam used by the terminal device to receive the second reference signal is a beam 3, that is, the beam 3 used by the terminal device cannot simultaneously receive the first downlink signal and the second downlink signal.

In still another possible implementation, when the terminal device determines, based on the first TCI and/or the second TCI configured by the network device, the beam type used for receiving the first downlink signal based on the first TCI or the beam type used for receiving the second downlink signal based on the second TCI, the terminal device determines, based on the beam type used for the first downlink signal or the second downlink signal, the first beam for receiving the first downlink signal based on the first TCI, or determines the second beam for receiving the second downlink signal based on the second TCI.

For example, when the first TCI indicates that the beam type used for the terminal device to receive the first downlink signal based on the first TCI is the first beam type, a beam used by the terminal device to receive the first downlink signal is the first beam used when the first reference signal and the second reference signal can be simultaneously received. It is assumed that the first reference signal and the second reference signal that can be simultaneously received are (SSB 0, SSB 1), and a beam pair that can be used for simultaneously receiving (SSB 0, SSB 1) is (beam 0, beam 1). In this case, the terminal device receives the first downlink signal by using the beam 0 based on the first TCI; or when the second TCI indicates that the beam type used for the terminal device to receive the second downlink signal based on the second TCI is the first beam type, a beam used by the terminal device to receive the second downlink signal is the second beam used when the first reference signal and the second reference signal can be simultaneously received. In this case, the terminal device receives the second downlink signal by using the beam 1.

Alternatively, when the first TCI indicates that the beam type used for the terminal device to receive the first downlink signal based on the first TCI is the second beam type, a beam used by the terminal device to receive the first downlink signal based on the first TCI is a beam used when the first reference signal can be received. It is assumed that an optimal beam used by the terminal device to receive the first reference signal is a beam 2, that is, the terminal device receives the first downlink signal by using the beam 2 based on the first TCI; or when the second TCI indicates that the beam type used for the terminal device to receive the second downlink signal based on the second TCI is the second beam type, a beam used by the terminal device to receive the second downlink signal based on the second TCI is a beam used when the second reference signal can be received. It is assumed that an optimal beam used by the terminal device to receive the second reference signal is a beam 3, that is, the terminal device receives the second downlink signal by using the beam 3 based on the second TCI.

In still another possible implementation, when the terminal device determines, based on the reporting type of the reported reference signal, the beam type used for receiving the first downlink signal based on the first TCI or the beam type used for receiving the second downlink signal based on the second TCI, the terminal device determines, based on the beam type used for the first downlink signal and/or the beam type used for the second downlink signal, the first beam for receiving the first downlink signal based on the first TCI, or determines the second beam for receiving the second downlink signal based on the second TCI.

For example, when a reporting type of the first reference signal reported by the terminal device is group-based, the beam type used for the terminal device to receive the first downlink signal based on the first TCI is the first beam type, a beam used by the terminal device to receive the first downlink signal based on the first TCI is the first beam used when the first reference signal and the second reference signal can be simultaneously received. It is assumed that the first reference signal and the second reference signal that can be simultaneously received are (SSB 0, SSB 1), and a beam pair that can be used for simultaneously receiving (SSB 0, SSB 1) is (beam 0, beam 1). In this case, group-based indicates to receive a first PDSCH by using the first beam that can be used for simultaneously receiving the SSB 0 and the SSB 1, and the terminal device receives the first downlink signal by using the beam 0; or when a reporting type of the second reference signal reported by the terminal device is group-based, and the beam type used for the terminal device to receive the second downlink signal is the first beam type, a beam used by the terminal device to receive the first downlink signal is the second beam used when the first reference signal and the second reference signal can be simultaneously received. In this case, group-based indicates to receive the second downlink signal by using the second beam that can be used for simultaneously receiving the SSB 0 and the SSB 1, and the terminal device receives the second downlink signal by using the beam 1.

Alternatively, when a reporting type of the first reference signal reported by the terminal device is non-group-based, and the beam type used for the terminal device to receive the first downlink signal based on the first TCI is the second beam type, a beam used by the terminal device to receive the first downlink signal based on the first TCI is a beam used when the first reference signal can be received. It is assumed that an optimal beam used by the terminal device to receive the first reference signal is a beam 2, that is, the terminal device receives the first downlink signal by using the beam 2 based on the first TCI; or when a reporting type of the second reference signal reported by the terminal device is non-group-based, and the beam type used for the terminal device to receive the second downlink signal based on the second TCI is the second beam type, a beam used by the terminal device to receive the second downlink signal is a beam used when the second reference signal can be received. It is assumed that an optimal beam used by the terminal device to receive the second reference signal is a beam 3, that is, the terminal device receives the second downlink signal by using the beam 3 based on the second TCI.

According to another signal transmission method provided in this application, after a network device sends a TCI switching instruction to a terminal device, the terminal device may determine, based on an indication of the network device, a beam type used for receiving a first downlink signal based on a first TCI, or determine a beam type used for receiving a second downlink signal based on a second TCI; and based on the indicated beam type, the terminal device receives the first downlink signal based on the first TCI or receives the second downlink signal based on the second TCI. In the method, the terminal device receives a signal based on the indication of the network device, so that the network device and the terminal device can establish a consistent understanding.

In a possible implementation, the network device may further determine, based on the beam type, time for completing TCI switching by the terminal device after receiving the TCI switching instruction.

When the beam type is the second beam type, the terminal device may determine whether a first target beam corresponding to a reference signal indicated by the first TCI is known, or determine whether a second target beam corresponding to a reference signal indicated by the second TCI is known. When the first target beam is unknown or the second target beam is unknown, after the TCI switching instruction is received, the time for completing TCI switching includes measurement time for determining L1-RSRP by the terminal device.

Optionally, the terminal device may receive the indication information from the network device, where the indication information indicates the reporting type of the reference signal, the reference signal includes the first reference signal and the second reference signal, and the reporting type includes the first reporting type and the second reporting type.

Optionally, the first reporting type may be group-based reporting, and the second reporting type may be non-group-based reporting.

When the indication information includes the second reporting type of the first reference signal, it is determined that the first target beam corresponding to the first TCI is known; or when the indication information includes the second reporting type of the second reference signal, it is determined that the second target beam corresponding to the second TCI is known. When it is determined that the first target beam corresponding to the first TCI is known, or when it is determined that the second target beam corresponding to the second TCI is known, it indicates that the time for completing TCI switching does not include the measurement time for determining the L1-RSRP by the terminal device. When it is determined that the first target beam is unknown or the second target beam is unknown, it indicates that the time for completing TCI switching includes the measurement time for determining L1-RSRP by the terminal device. In this implementation, when the terminal device determines which beam is used to receive the downlink signal, the network device may determine time for scheduling the terminal device.

It should be understood that the foregoing descriptions are merely intended to help a person skilled in the art better understand embodiments of this application, but are not intended to limit the scope of embodiments of this application. It is clear that a person skilled in the art may make various equivalent modifications or changes based on the foregoing examples. For example, some steps in the foregoing methods may be unnecessary, or some new steps may be added. Alternatively, any two or more of the foregoing embodiments are combined. A modified, changed, or combined solution also falls within the scope of embodiments of this application.

It should be further understood that division of manners, cases, categories, and embodiments in embodiments of this application is merely intended for ease of description, and should not constitute a particular limitation. Features in the manners, categories, cases, and embodiments may be combined without contradiction.

It should be further understood that numerals used in embodiments of this application are merely distinguished for ease of description, but are not intended to limit the scope of embodiments of this application. The sequence numbers of the foregoing processes do not mean execution sequences. The execution sequences of the processes should be determined based on functions and internal logic of the processes, and should not constitute any limitation on implementation processes of embodiments of this application.

It should be further understood that the foregoing descriptions of embodiments of this application emphasize differences between the embodiments. For same or similar parts that are not mentioned, refer to the embodiments. For brevity, details are not described herein again.

With reference to FIG. 1 to FIG. 12, the foregoing describes embodiments of the signal transmission method provided in embodiments of this application. The following describes a terminal device provided in embodiments of this application.

In this embodiment, the foregoing terminal device may be divided into functional modules according to the foregoing methods. For example, each functional module may be obtained through division based on each corresponding function, or two or more functions may be integrated into one processing module. The integrated module may be implemented in a form of hardware. It should be noted that module division in embodiments is an example and is merely logical function division. In practice, there may be another division manner.

It should be noted that related content of the steps in the foregoing method embodiments may be referenced to function descriptions of corresponding functional modules, and details are not described herein again.

The terminal device provided in embodiments of this application is configured to perform any signal transmission method provided in the foregoing method embodiments. Therefore, effects that are the same as those of the foregoing implementation method can be achieved. When an integrated unit is used, the terminal device may include a processing module, a storage module, and a communication module. The processing module may be configured to control and manage an action of the terminal device. For example, the processing module may be configured to support the terminal device in performing steps performed by a processing unit. The storage module may be configured to support storage of program code, data, and the like. The communication module may be configured to support communication between the terminal device and another device.

The processing module may be a processor or a controller. The processor may implement or execute various example logical blocks, modules, and circuits described with reference to content disclosed in this application. The processor may alternatively be a combination for implementing a computing function, for example, a combination including one or more microprocessors or a combination of a digital signal processor (digital signal processing, DSP) and a microprocessor. The storage module may be a memory. The communication module may be specifically a device, for example, a radio frequency circuit, a Bluetooth chip, or a Wi-Fi chip, that interacts with another terminal device.

For example, FIG. 13 is a block diagram of a communication apparatus 1300 according to an embodiment of this application. The communication apparatus 1300 may correspond to the terminal device described in embodiments of the method 1100 and the method 1200, or may be used in a chip or a component of the terminal device. In addition, modules or units in the communication apparatus 1300 are separately configured to perform actions or processing processes performed by the terminal device described in embodiments of the method 1100 and the method 1200.

As shown in FIG. 13, the communication apparatus 1300 includes a transceiver unit 1310 and a processing unit 1320. The transceiver unit 1310 is configured to send or receive a specific signal under driving of the processing unit 1320.

In some embodiments:
The processing unit 1320 is configured to determine a beam type used for receiving a first downlink signal and/or a second downlink signal, where a time domain resource of the first downlink signal overlaps a time domain resource of the second downlink signal, the beam type includes a first beam type or a second beam type, the first beam type indicates: a first beam used when a terminal device can simultaneously receive a first reference signal and a second reference signal, and/or a second beam used when the terminal device can simultaneously receive the first reference signal and the second reference signal, and the second beam type indicates: a beam used when the terminal device can receive the first reference signal, or a beam used when the terminal device can receive the second reference signal.

The transceiver unit 1310 is configured to receive the first downlink signal and/or the second downlink signal based on the beam type.

The first downlink signal and the first reference signal have a quasi co-location QCL relationship, the second downlink signal and the second reference signal have a QCL relationship, and a receive beam for the first downlink signal is different from a receive beam for the second downlink signal.

According to the communication apparatus provided in this application, when the first downlink signal and the second downlink signal that are received by the terminal device overlap in time, the terminal device may determine, based on an indication of the network device, the beam type used for receiving the first downlink signal and/or the second downlink signal. The beam type may be a beam type that can be used for simultaneously receiving reference signals, or the beam type may be a beam type that cannot be used for simultaneously receiving reference signals. Finally, the terminal device receives the first downlink signal and/or the second downlink signal based on the beam type indicated by the network device. According to the apparatus provided in this application, the terminal device can simultaneously receive the first downlink signal and the second downlink signal based on the indication of the network device, to improve a data receiving throughput of the terminal device and improve performance of the terminal device.

In some other embodiments:
The processing unit 1320 is configured to: after a TCI switching instruction sent by a network device is received, determine a beam type used for receiving a first downlink signal based on a first TCI, or determine a beam type used for receiving a second downlink signal based on a second TCI.

The transceiver unit 1310 is configured to: based on the beam type, receive the first downlink signal based on the first TCI, or receive the second downlink signal based on the second TCI, where the beam type includes a first beam type or a second beam type, the first beam type indicates: a first beam that is used for a terminal device to receive the first downlink signal and that is in a beam pair through which a first reference signal and a second reference signal can be simultaneously received, or a second beam that is used for the terminal device to receive the second downlink signal and that is in the beam pair through which the first reference signal and the second reference signal can be simultaneously received, the second beam type indicates: a beam used when the terminal device can receive the first reference signal, or a beam used when the terminal device can receive the second reference signal, and the TCI switching instruction indicates to switch from the first TCI and the second TCI to the first TCI or the second TCI.

According to the communication apparatus provided in this application, after the terminal device receives the TCI switching instruction sent by the network device, the terminal device may determine, based on an indication of the network device, the beam type used for receiving the first downlink signal based on the first TCI, or determine the beam type used for receiving the second downlink signal based on the second TCI; and based on the indicated beam type, the terminal device receives the first downlink signal based on the first TCI or receives the second downlink signal based on the second TCI. The apparatus receives a signal based on the indication of the network device, so that the network device and the terminal device can establish a consistent understanding.

Further, the communication apparatus 1300 may include a storage unit, and the transceiver unit 1310 may be a transceiver, an input/output interface, or an interface circuit. The storage unit is configured to store instructions executed by the transceiver unit 1310 and the processing unit 1320. The transceiver unit 1310, the processing unit 1320, and the storage unit are coupled to each other. The storage unit stores the instructions. The processing unit 1320 is configured to execute the instructions stored in the storage unit. The transceiver unit 1310 is configured to send or receive a specific signal under driving of the processing unit 1320.

It should be understood that, for a specific process in which the units in the communication apparatus 1300 perform the corresponding steps, refer to the descriptions related to the terminal device with reference to the method 1100 and the method 1200 and the related embodiments in FIG. 11 and FIG. 12. For brevity, details are not described herein again.

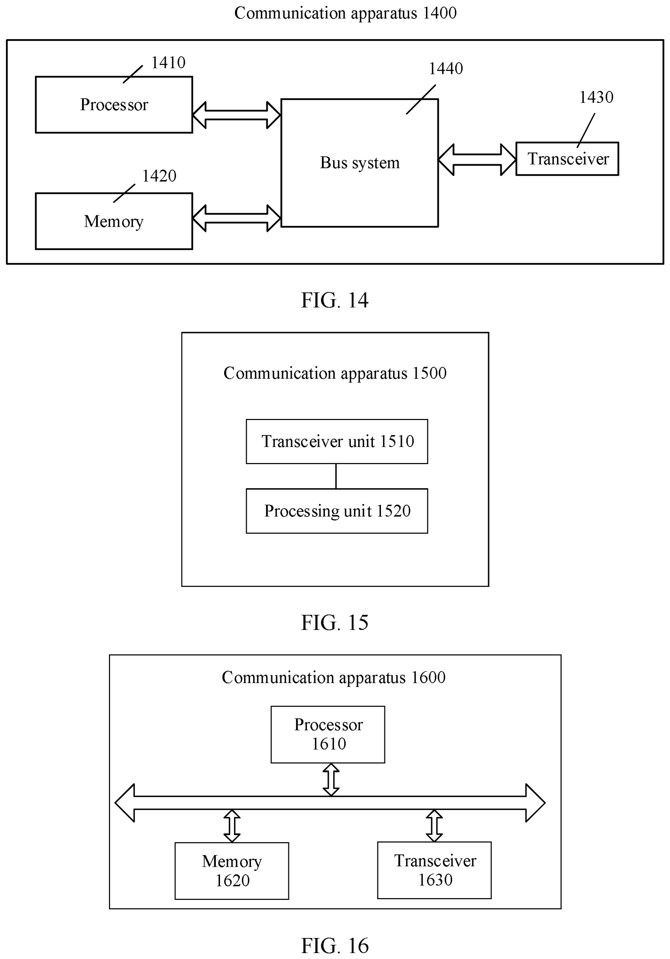

FIG. 14 is a block diagram of another example of a communication apparatus 1400 according to an embodiment of this application. As shown in FIG. 14, a communication apparatus 1400 may include a processor 1410, a memory 1420, a transceiver 1430, and a bus system 1440. Components of the communication apparatus 1400 are coupled together by using the bus system 1440. In addition to a data bus, the bus system 1440 may further include a power bus, a control bus, a status signal bus, and the like. However, for clear description, various buses are marked as the bus system 1440 in FIG. 14. For ease of illustration, FIG. 14 is merely an example for illustration.

The communication apparatus 1300 shown in FIG. 13 or the communication apparatus 1400 shown in FIG. 14 can implement the steps performed by the terminal device in the foregoing embodiments of the method 1100 and the method 1200. For similar descriptions, refer to the descriptions in the foregoing corresponding methods. To avoid repetition, details are not described herein again.

It should be further understood that the communication apparatus 1300 shown in FIG. 13 or the communication apparatus 1400 shown in FIG. 14 may be a terminal device.

FIG. 15 is a block diagram of a communication apparatus 1500 according to an embodiment of this application. The communication apparatus 1500 may correspond to the network device described in the foregoing method 1100 and the method 1200, or may be a chip or a component used in the network device. In addition, modules or units in the communication apparatus 1200 is configured to perform actions or processing processes performed by the network device in the method 1100 and the method 1200.

As shown in FIG. 15, the communication apparatus 1500 may include a transceiver unit 1510 and a processing unit 1520. The transceiver unit 1510 is configured to send or receive a specific signal under driving of the processing unit 1520.

In some embodiments:
The processing unit 1520 is configured to indicate a beam type used for a terminal device to receive a first downlink signal and/or a second downlink signal, where a time domain resource of the first downlink signal overlaps a time domain resource of the second downlink signal, the beam type includes a first beam type or a second beam type, the first beam type indicates: a first beam used when the terminal device can simultaneously receive a first reference signal and a second reference signal, and/or a second beam used when the terminal device can simultaneously receive the first reference signal and the second reference signal, and the second beam type indicates: a beam used when the terminal device can receive the first reference signal, and/or a beam used when the terminal device can receive the second reference signal.

The first downlink signal and the first reference signal have a quasi co-location QCL relationship, the second downlink signal and the second reference signal have a QCL relationship, and a receive beam for the first downlink signal is different from a receive beam for the second downlink signal.

According to the communication apparatus provided in this application, when the first downlink signal and the second downlink signal that are sent by the network device overlap in time, the network device may indicate the beam type used for the terminal device to receive the first downlink signal and/or the second downlink signal. The beam type may be a beam type that can be used for simultaneously receiving reference signals, or the beam type may be a beam type that cannot be used for simultaneously receiving reference signals. Finally, the terminal device receives the first downlink signal and/or the second downlink signal based on the beam type indicated by the network device. According to the method provided in this application, the terminal device can simultaneously receive the first downlink signal and the second downlink signal based on the indication of the network device, to improve a data receiving throughput of the terminal device and improve performance of the terminal device.

In some other embodiments:
The processing unit 1520 is configured to: after a TCI switching instruction is sent to a terminal device, indicate a beam type used for the terminal device to receive a first downlink signal based on a first TCI, or indicate a beam type used for the terminal device to receive a second downlink signal based on a second TCI, where the beam type includes: a first beam type or a second beam type, the first beam type indicates: a first beam or a second beam in a beam pair through which the terminal device can simultaneously receive a first reference signal and a second reference signal, the second beam type indicates: a beam used when the terminal device can receive the first reference signal, or a beam used when the terminal device can receive the second reference signal, and the TCI switching instruction indicates to switch from the first TCI and the second TCI to the first TCI or the second TCI.

The first TCI is used to receive the first downlink signal, the second TCI is used to receive the second downlink signal, and a receive beam for the first downlink signal is different from a receive beam for the second downlink signal.

According to the communication apparatus provided in this application, after the network device sends the TCI switching instruction to the terminal device, the network device may indicate the beam type used for the terminal device to receive the first downlink signal based on the first TCI, or determine the beam type used for receiving the second downlink signal based on the second TCI. Based on the beam type indicated by the network device, the terminal device may receive the first downlink signal based on the first TCI or receive the second downlink signal based on the second TCI. The indication information of the network device in the method can enable the network device and the terminal device to establish a consistent understanding.

It should be understood that, for a specific process in which the units in the communication apparatus 1500 perform the corresponding steps, refer to the foregoing descriptions related to the network device with reference to related embodiments in the method 1100 and the method 1200. For brevity, details are not described herein again.

Optionally, the transceiver unit 1510 may include a receiving unit (module) and a sending unit (module), configured to perform the steps of receiving information and sending information by the network device in the embodiments of the method 1100 and the method 1200.

Further, the communication apparatus 1500 may further include a storage unit. The transceiver unit 1510 may be a transceiver, an input/output interface, or an interface circuit. The storage unit is configured to store instructions executed by the transceiver unit 1510 and the processing unit 1520. The transceiver unit 1510, the processing unit 1520, and the storage unit are coupled to each other. The storage unit stores the instructions. The processing unit 1520 is configured to execute the instructions stored in the storage unit. The transceiver unit 1510 is configured to send or receive a specific signal under driving of the processing unit 1520.

It should be understood that FIG. 16 is a block diagram of another example of a communication apparatus 1600 according to an embodiment of this application. As shown in FIG. 16, the communication apparatus 1600 may include a processor 1610, a memory 1620, and a transceiver 1630.

The communication apparatus 1500 shown in FIG. 15 or the communication apparatus 1600 shown in FIG. 16 can implement the steps performed by the network device in the embodiments of the method 1100 and the method 1200. For similar descriptions, refer to the descriptions in the foregoing corresponding methods. To avoid repetition, details are not described herein again.

It should be further understood that the communication apparatus 1500 shown in FIG. 15 or the communication apparatus 1600 shown in FIG. 16 may be a network device.

It should be further understood that division into the units in the apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. The processing element herein may also be referred to as a processor, and may be an integrated circuit having a signal processing capability. In an implementation process, steps in the foregoing methods or the foregoing units may be implemented by using a hardware integrated logic circuit in a processor element, or may be implemented in the form of software invoked by the processing element.

In an example, a unit in any one of the foregoing apparatuses may be one or more integrated circuits configured to implement the foregoing methods, for example, one or more application-specific integrated circuits (application-specific integrated circuits, ASICs), one or more digital signal processors (digital signal processors, DSPs), one or more field programmable gate arrays (field programmable gate arrays, FPGAs), or a combination of at least two of these integrated circuit forms. For another example, when the unit in the apparatus is implemented in a form of scheduling a program by the processing element, the processing element may be a general-purpose processor, for example, a central processing unit (central processing unit, CPU) or another processor that may invoke the program. For still another example, the units may be integrated and implemented in a form of a system-on-a-chip (system-on-a-chip, SOC).

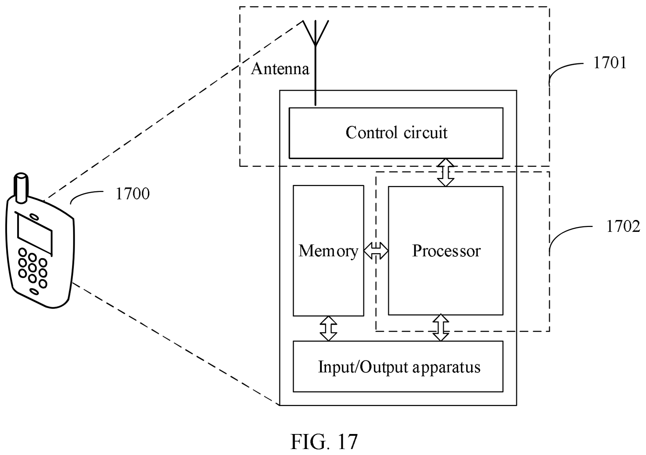

FIG. 17 is a diagram of a structure of a terminal device 1700 according to this application. The communication apparatus 1300 or the communication apparatus 1400 may be configured in the terminal device 1700. Alternatively, the communication apparatus 1300 or the communication apparatus 1400 may be the terminal device 1700. In other words, the terminal device 1700 may perform actions performed by the terminal device in the method 1100 to the method 1200. Optionally, for ease of description, FIG. 17 shows only main components of the terminal device. As shown in FIG. 17, the terminal device 1700 includes a processor, a memory, a control circuit, an antenna, and an input/output apparatus.

The processor is mainly configured to: process a communication protocol and communication data, control an entire terminal device, execute a software program, and process data of the software program, for example, is configured to support the terminal device in performing the actions described in the foregoing embodiments of the indication method for transmitting a precoding matrix. The memory is mainly configured to store the software program and the data, for example, store a codebook described in the foregoing embodiments. The control circuit is mainly configured to convert a baseband signal and a radio frequency signal and process the radio frequency signal. The control circuit and the antenna together may also be referred to as a transceiver, and are mainly configured to receive/send a radio frequency signal in a form of an electromagnetic wave. The input/output apparatus, such as a touchscreen, a display, or a keyboard, is mainly configured to: receive data input by a user and output data to the user.

After the terminal device is powered on, the processor may read the software program in the storage unit, interpret and execute instructions of the software program, and process data of the software program. When data needs to be sent wirelessly, the processor performs baseband processing on the to-be-sent data, and then outputs a baseband signal to a radio frequency circuit. The radio frequency circuit performs radio frequency processing on the baseband signal, and then sends, through the antenna, a radio frequency signal in a form of an electromagnetic wave. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data.

A person skilled in the art may understand that for ease of description, FIG. 17 shows only one memory and one processor. In an actual terminal device, there may be a plurality of processors and memories. The memory may also be referred to as a storage medium, a storage device, or the like. This is not limited in embodiments of this application.

For example, the processor may include a baseband processor and a central processing unit. The baseband processor is mainly configured to process the communication protocol and the communication data. The central processing unit is mainly configured to: control the entire terminal device, execute the software program, and process the data of the software program. The processor in FIG. 17 integrates functions of the baseband processor and the central processing unit. A person skilled in the art may understand that the baseband processor and the central processing unit may alternatively be processors independent of each other, and are interconnected by using a technology such as through a bus. A person skilled in the art may understand that the terminal device may include a plurality of baseband processors to adapt to different network standards, and the terminal device may include a plurality of central processing units to enhance processing capabilities of the terminal device, and components of the terminal device may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program, and the processor executes the software program to implement a baseband processing function.

For example, in embodiments of this application, the antenna having a transceiver function and the control circuit may be considered as a transceiver unit 1701 of the terminal device 1700, and the processor having a processing function may be considered as a processing unit 1702 of the terminal device 1700. As shown in FIG. 17, the terminal device 1700 includes the transceiver unit 1701 and the processing unit 1702. The transceiver unit may also be referred to as a transceiver, a transceiver machine, a transceiver apparatus, or the like. Optionally, a component that is in the transceiver unit 1701 and that is configured to implement a receiving function may be considered as a receiving unit, and a component that is in the transceiver unit 1701 and that is configured to implement a sending function may be considered as a sending unit. That is, the transceiver unit 1701 includes the receiving unit and the sending unit. For example, the receiving unit may also be referred to as a receiver, a receive machine, or a receiving circuit, and the sending unit may also be referred to as a transmitter, a transmit machine, or a transmitting circuit.

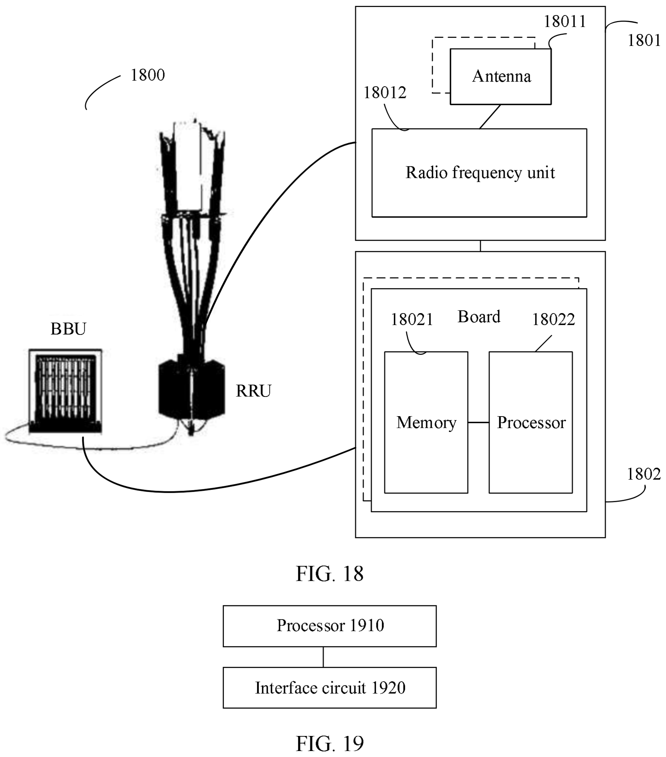

FIG. 18 is a diagram of a structure of a network device 1800 according to an embodiment of this application. The network device 1800 may be configured to implement functions of the network device in the foregoing methods. The network device 1800 includes one or more radio frequency units, for example, a remote radio unit (remote radio unit, RRU) 1801, and one or more baseband units (baseband units, BBUs) (which may also be referred to as a digital unit, (digital unit, DU)) 1802. The RRU 1801 may be referred to as a transceiver unit, a transceiver machine, a transceiver circuit, a transceiver, or the like, and may include at least one antenna 18011 and a radio frequency unit 18012. The RRU 1801 is mainly configured to: receive/send a radio frequency signal, and perform conversion between a radio frequency signal and a baseband signal, for example, configured to send a signaling message in the foregoing embodiments to a terminal device. The BBU 1802 is mainly configured to: perform baseband processing, control a base station, and the like. The RRU 1801 and the BBU 1802 may be physically arranged together, or may be physically arranged separately, that is, in a distributed base station.

The BBU 1802 is a control center of the base station, may also be referred to as a processing unit, and is mainly configured to complete a baseband processing function, such as channel coding, multiplexing, modulation, or spectrum spreading. For example, the BBU (the processing unit) 1802 may be configured to control the base station 180 to perform an operation procedure related to the network device in the foregoing method embodiments.

In an example, the BBU 1802 may include one or more boards. A plurality of boards may jointly support a radio access network (for example, an LTE system or a 5G system) of a single access standard, or may respectively support radio access networks of different access standards. The BBU 1802 further includes a memory 18021 and a processor 18022. The memory 18021 is configured to store necessary instructions and data. For example, the memory 18021 stores the codebook and the like in the foregoing embodiments. The processor 18022 is configured to control the base station to perform a necessary action, for example, configured to control the base station to perform an operation procedure related to the network device in the foregoing method embodiments. The memory 18021 and the processor 18022 may serve one or more boards. In other words, a memory and a processor may be disposed on each board. Alternatively, a plurality of boards may share a same memory and a same processor. In addition, a necessary circuit may further be disposed on each board.

In a possible implementation, with development of a system-on-a-chip (system-on-a-chip, SoC) technology, all or a part of functions of the part 1802 and the part 1801 may be implemented by using the SoC technology, for example, implemented by using one base station function chip. The base station function chip integrates devices such as a processor, a memory, and an antenna interface. A program of a base station-related function is stored in the memory, and the processor executes the program, to implement the base station-related function. Optionally, the base station function chip can also read from an external memory of the chip, to implement the base station-related function.

It should be further understood that division into the units in the apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. The processing element herein may also be referred to as a processor, and may be an integrated circuit having a signal processing capability. In an implementation process, steps in the foregoing methods or the foregoing units may be implemented by using a hardware integrated logic circuit in a processor element, or may be implemented in the form of software invoked by the processing element. In an example, a unit in any one of the foregoing apparatuses may be one or more integrated circuits configured to implement the foregoing methods, for example, one or more application-specific integrated circuits (application-specific integrated circuits, ASICs), one or more digital signal processors (digital signal processors, DSPs), one or more field programmable gate arrays (field programmable gate arrays, FPGAs), or a combination of at least two of these integrated circuit forms. For another example, when the unit in the apparatus is implemented in a form of scheduling a program by the processing element, the processing element may be a general-purpose processor, for example, a central processing unit (central processing unit, CPU) or another processor that may invoke the program. For still another example, the units may be integrated and implemented in a form of a system-on-a-chip (system-on-a-chip, SOC).

An embodiment of this application further provides a chip system. As shown in FIG. 19, the chip system includes at least one processor 1910 and at least one interface circuit 1920. The processor 1910 and the interface circuit 1920 may be connected to each other through a wire. For example, the interface circuit 1920 may be configured to receive a signal from another apparatus (for example, a memory of the terminal device 1700). For another example, the interface circuit 1920 may be configured to send a signal to another apparatus (for example, the processor 1702). For example, the interface circuit 1920 may read instructions stored in a memory, and send the instructions to the processor 1910. When the instructions are executed by the processor 1910, the terminal device is enabled to perform the steps performed by the terminal device in the foregoing embodiments. Certainly, the chip system may further include another discrete component. This is not specifically limited in this embodiment of this application.

An embodiment of this application further provides a signal transmission system. The system includes the network device (for example, a base station) and the terminal device (for example, a mobile phone) provided in the foregoing method embodiments.

An embodiment of this application further provides a computer-readable storage medium, configured to store computer program code. The computer program includes instructions used to perform any signal transmission method provided in the foregoing embodiments of this application. The readable medium may be a read-only memory (read-only memory, ROM) or a random access memory (random access memory, RAM). This is not limited in embodiments of this application.

This application further provides a computer program product. The computer program product includes instructions. When the instructions are executed, a network device and a terminal device are enabled to perform corresponding operations in the foregoing methods.

An embodiment of this application further provides a chip disposed in a communication apparatus. The chip includes a processing unit and a communication unit. The processing unit may be, for example, a processor, and the communication unit may be, for example, an input/output interface, a pin, or a circuit. The processing unit may execute computer instructions, so that the communication apparatus performs any signal transmission method provided in the foregoing embodiments of this application.

Optionally, the computer instructions are stored in a storage unit.

Optionally, the storage unit is a storage unit in the chip, for example, a register or a cache. Alternatively, the storage unit may be a storage unit that is in the terminal and that is located outside the chip, for example, a ROM, another type of static storage device that can store static information and instructions, or a random RAM. Any processor mentioned above may be a CPU, a microprocessor, an ASIC, or one or more integrated circuits configured to control program execution of the feedback information transmission method. The processing unit and the storage unit may be decoupled, are disposed on different physical devices respectively, and are connected in a wired or wireless manner to implement respective functions of the processing unit and the storage unit, to support the system chip in implementing various functions in the foregoing embodiments. Alternatively, the processing unit and the memory may be coupled to the same device.

The terminal device, the computer-readable storage medium, the computer program product, or the chip provided in embodiments is configured to perform the corresponding method provided above. Therefore, for beneficial effect that can be achieved, refer to the beneficial effect of the corresponding method provided above. Details are not described herein again.

It may be understood that the memory in this embodiment of this application may be a volatile memory or a nonvolatile memory, or may include a volatile memory and a nonvolatile memory. The non-volatile memory may be a ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a RAM, and serves as an external cache. There are a plurality of different types of RAMs, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

In this application, names may be assigned to various objects such as messages/information/devices/network
elements/systems/apparatuses/actions/operations/procedures/concepts. It can be understood that the specific names do not constitute a limitation on the related objects. The assigned names may vary with factors such as scenarios, contexts, or usage habits. Understanding of technical meanings of technical terms in this application should be determined mainly based on functions and technical effect embodied/performed by the technical terms in the technical solutions.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

All or some of the methods in embodiments of this application may be implemented by software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, or other programmable apparatuses. The computer programs or the instructions may be stored in a computer-readable storage medium, or may be transmitted through the computer-readable storage medium. The computer-readable storage medium may be any usable medium accessible by the computer, or a data storage device, for example, a server, integrating one or more usable media.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a readable storage medium, and includes several instructions for enabling a computer device (which may be a personal computer, a server, or a network device) to perform all or some of the steps of the methods described in embodiments of this application. The readable storage medium includes any medium that can store program code, for example, a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A signal transmission method, wherein the method comprises:
indicating a beam type used for a terminal device to receive a first downlink signal and/or a second downlink signal, wherein a time domain resource of the first downlink signal overlaps a time domain resource of the second downlink signal, the beam type comprises a first beam type or a second beam type, the first beam type indicates: a first beam used when the terminal device can simultaneously receive a first reference signal and a second reference signal, and/or a second beam used when the terminal device can simultaneously receive the first reference signal and the second reference signal, and the second beam type indicates: a beam used when the terminal device can receive the first reference signal, and/or a beam used when the terminal device can receive the second reference signal; and
the first downlink signal and the first reference signal have a quasi co-location QCL relationship, the second downlink signal and the second reference signal have a QCL relationship, and a receive beam for the first downlink signal is different from a receive beam for the second downlink signal.

2. The method according to claim 1, wherein the first downlink signal is a first physical downlink shared channel PDSCH, the second downlink signal is a second PDSCH, and the method further comprises:
determining that sending time of the first PDSCH and sending time of second downlink control information DCI meet a first condition, wherein
first DCI is used to schedule the first PDSCH, and the second DCI is used to schedule the second PDSCH.

3. The method according to claim 2, wherein the second DCI is earlier than the first PDSCH.

4. The method according to claim 2 or 3, wherein the first condition is that a time interval between the first PDSCH and the second DCI is less than, or less than or equal to a preset threshold.

5. The method according to claim 2, wherein the first downlink signal is a first channel state information-reference signal CSI-RS, and/or the second downlink signal is a second CSI-RS, and the method further comprises:
indicating the terminal device to measure a reference signal, wherein the reference signal comprises the first reference signal and/or the second reference signal; and
indicating a reporting type of the reference signal to the terminal device, wherein the reporting type comprises a first reporting type and a second reporting type; and
the first reporting type indicates: the terminal device reports measurement results obtained when the first reference signal and the second reference signal can be simultaneously received, and/or reports an identifier of the first reference signal and an identifier of the second reference signal, and the second reporting type indicates: the terminal device reports a measurement result obtained when the first reference signal can be received and/or the identifier of the first reference signal, or reports a measurement result obtained when the second reference signal can be received and/or the identifier of the second reference signal.

6. The method according to claim 5, wherein the first reporting type comprises group-based reporting, and the second reporting type comprises non-group-based reporting.

7. The method according to any one of claims 2 to 6, wherein indicating the beam type used for the terminal device to receive the first downlink signal and/or the second downlink signal comprises:
sending a media access control control element MAC CE to the terminal device, wherein the MAC CE indicates the beam type used for the terminal device to receive the first downlink signal and/or the second downlink signal.

8. The method according to any one of claims 2 to 4, wherein the first downlink signal is the first PDSCH, and/or the second downlink signal is the second PDSCH, and indicating the beam type used for the terminal device to receive the first downlink signal and/or the second downlink signal comprises:
sending the first DCI to the terminal device, wherein the first DCI indicates a beam type used for the terminal device to receive the first downlink signal; and/or
sending the second DCI to the terminal device, wherein the second DCI indicates a beam type used for the terminal device to receive the second downlink signal.

9. The method according to any one of claims 2 to 4, wherein the first downlink signal is the first PDSCH, and/or the second downlink signal is the second PDSCH, and indicating the beam type used for the terminal device to receive the first downlink signal and/or the second downlink signal comprises:
configuring a first transmission configuration indicator TCI of the terminal device, wherein the first TCI indicates a beam type used for the terminal device to receive the first downlink signal;
and/or
configuring a second TCI of the terminal device, wherein the second TCI indicates a beam type used for the terminal device to receive the second downlink signal.

10. A signal transmission method, wherein the method comprises:
determining a beam type used for receiving a first downlink signal and/or a second downlink signal, wherein a time domain resource of the first downlink signal overlaps a time domain resource of the second downlink signal, the beam type comprises a first beam type or a second beam type, the first beam type indicates: a first beam used when a terminal device can simultaneously receive a first reference signal and a second reference signal, and/or a second beam used when the terminal device can simultaneously receive the first reference signal and the second reference signal, and the second beam type indicates: a beam used when the terminal device can receive the first reference signal, or a beam used when the terminal device can receive the second reference signal; and
receiving the first downlink signal and/or the second downlink signal based on the beam type, wherein
the first downlink signal and the first reference signal have a quasi co-location QCL relationship, the second downlink signal and the second reference signal have a QCL relationship, and a receive beam for the first downlink signal is different from a receive beam for the second downlink signal.

11. The method according to claim 10, wherein the first downlink signal is a first PDSCH, the second downlink signal is a second PDSCH, and the method further comprises:
determining that receiving time of the first PDSCH and receiving time of second DCI meet a first condition, wherein
first DCI is used to schedule the first PDSCH, and the second DCI is used to schedule the second PDSCH.

12. The method according to claim 11, wherein the second DCI is earlier than the first PDSCH.

13. The method according to claim 11 or 12, wherein the first condition is that a time interval between the first PDSCH and the second DCI is less than, or less than or equal to a preset threshold.

14. The method according to claim 10, wherein the first downlink signal is a first CSI-RS, and/or the second downlink signal is a second CSI-RS, and the method further comprises:
measuring a reference signal based on an indication of a network device, wherein the reference signal comprises the first reference signal and/or the second reference signal; and
sending a reporting type of the reference signal to the network device, wherein the reporting type comprises a first reporting type and a second reporting type; and
the first reporting type indicates: the terminal device reports measurement results obtained when the first reference signal and the second reference signal can be simultaneously received, and/or reports an identifier of the first reference signal and an identifier of the second reference signal, and the second reporting type indicates: the terminal device reports a measurement result obtained when the first reference signal can be received and/or the identifier of the first reference signal, or reports a measurement result obtained when the second reference signal can be received and/or the identifier of the second reference signal.

15. The method according to claim 14, wherein the first reporting type comprises group-based reporting, and the second reporting type comprises non-group-based reporting.

16. The method according to any one of claims 10 to 15, wherein determining the beam type used for receiving the first downlink signal and/or the second downlink signal comprises:
receiving media access control control element MAC CE signaling sent by the network device, wherein the MAC CE signaling indicates the beam type used for the terminal device to receive the first downlink signal and/or the second downlink signal; and
determining, based on the MAC CE signaling, the beam type used for receiving the first downlink signal and/or the second downlink signal.

17. The method according to any one of claims 11 to 13, wherein the first downlink signal is the first PDSCH, and/or the second downlink signal is the second PDSCH, and determining, by the terminal device, the beam type used for receiving the first downlink signal and/or the second downlink signal comprises:
receiving the first DCI sent by a network device, wherein the first DCI indicates a beam type used for the terminal device to receive the first downlink signal;
determining, based on the first DCI, the beam type used for receiving the first downlink signal;
and/or
receiving the second DCI sent by the network device, wherein the second DCI indicates a beam type used for the terminal device to receive the second downlink signal; and
determining, based on the second DCI, the beam type used for receiving the second downlink signal.

18. The method according to any one of claims 11 to 13, wherein the first downlink signal is the first PDSCH, and/or the second downlink signal is the second PDSCH, and determining, by the terminal device, the beam type used for receiving the first downlink signal and/or the second downlink signal comprises:
determining, based on a first transmission configuration indicator TCI configured by a network device, a beam type used for receiving the first downlink signal; and/or
determining, based on a second TCI configured by the network device, a beam type used for receiving the second downlink signal.

19. The method according to any one of claims 11 to 13, wherein determining, by the terminal device, the beam type used for receiving the first downlink signal and/or the second downlink signal comprises:
receiving indication information from a network device, wherein the indication information indicates a reporting type of a reference signal, the reference signal comprises the first reference signal and/or the second reference signal, and the reporting type comprises a first reporting type and a second reporting type; and
the first reporting type indicates: the terminal device reports measurement results obtained when the first reference signal and the second reference signal can be simultaneously received, and/or reports an identifier of the first reference signal and an identifier of the second reference signal, and the second reporting type indicates: the terminal device reports a measurement result obtained when the first reference signal can be received and/or the identifier of the first reference signal, or reports a measurement result obtained when the second reference signal can be received and/or the identifier of the second reference signal; and
determining, based on the reporting type, the beam type used for receiving the first downlink signal and/or the second downlink signal.

20. The method according to claim 19, wherein the first reporting type comprises group-based reporting, and the second reporting type comprises non-group-based reporting.

21. The method according to any one of claims 10 to 20, wherein receiving, by the terminal device, the first downlink signal and/or the second downlink signal based on the beam type comprises:
determining, based on the beam type, the first beam and/or the second beam for receiving the first downlink signal and/or the second downlink signal; and
when the first beam is a beam in a beam pair through which the terminal device can simultaneously receive the first reference signal and the second reference signal, and/or the second beam is a beam in the beam pair through which the terminal device can simultaneously receive the first reference signal and the second reference signal, receiving the first downlink signal by using the first beam, and simultaneously, receiving the second downlink signal by using the second beam.

22. A signal transmission method, wherein the method comprises:
after sending a TCI switching instruction to a terminal device, indicating a beam type used for the terminal device to receive a first downlink signal based on a first TCI, or indicating a beam type used for the terminal device to receive a second downlink signal based on a second TCI, wherein the beam type comprises: a first beam type or a second beam type, the first beam type indicates: a first beam or a second beam in a beam pair through which the terminal device can simultaneously receive a first reference signal and a second reference signal, the second beam type indicates: a beam used when the terminal device can receive the first reference signal, or a beam used when the terminal device can receive the second reference signal, and the TCI switching instruction indicates to switch from the first TCI and the second TCI to the first TCI or the second TCI; and
the first TCI is used to receive the first downlink signal, the second TCI is used to receive the second downlink signal, and a receive beam for the first downlink signal is different from a receive beam for the second downlink signal.

23. The method according to claim 22, wherein indicating the beam type used for the terminal device to receive the first downlink signal based on the first TCI, or the beam type used for the terminal device to receive the second downlink signal based on the second TCI comprises:
sending a media access control control element MAC CE to the terminal device, wherein the MAC CE indicates: the beam type used for the terminal device to receive the first downlink signal based on the first TCI, or the beam type used for the terminal device to receive the second downlink signal based on the second TCI.

24. The method according to claim 22, wherein indicating the beam type used for the terminal device to receive the first downlink signal based on the first TCI, or the beam type used for the terminal device to receive the second downlink signal based on the second TCI comprises:
sending first DCI to the terminal device, wherein the first DCI indicates the beam type used for the terminal device to receive the first downlink signal based on the first TCI; or
sending second DCI to the terminal device, wherein the second DCI indicates the beam type used for the terminal device to receive the second downlink signal based on the second TCI.

25. The method according to claim 22, wherein indicating the beam type used for the terminal device to receive the first downlink signal based on the first TCI, or the beam type used for the terminal device to receive the second downlink signal based on the second TCI comprises:
configuring, in the first TCI, the beam type used for the terminal device to receive the first downlink signal; or
configuring, in the second TCI, the beam type used for the terminal device to receive the second downlink signal.

26. A signal transmission method, wherein the method comprises:
after receiving a TCI switching instruction sent by a network device, determining a beam type used for receiving a first downlink signal based on a first TCI, or determining a beam type used for receiving a second downlink signal based on a second TCI; and
based on the beam type, receiving the first downlink signal based on the first TCI, or receiving the second downlink signal based on the second TCI, wherein the beam type comprises a first beam type or a second beam type, the first beam type indicates: a first beam that is used for a terminal device to receive the first downlink signal and that is in a beam pair through which a first reference signal and a second reference signal can be simultaneously received, or a second beam that is used for the terminal device to receive the second downlink signal and that is in the beam pair through which the first reference signal and the second reference signal can be simultaneously received, the second beam type indicates: a beam used when the terminal device can receive the first reference signal, or a beam used when the terminal device can receive the second reference signal, and the TCI switching instruction indicates to switch from the first TCI and the second TCI to the first TCI or the second TCI; and
the first TCI is used to receive the first downlink signal, the second TCI is used to receive the second downlink signal, and a receive beam for the first downlink signal is different from a receive beam for the second downlink signal.

27. The method according to claim 26, wherein determining the beam type used for receiving the first downlink signal based on the first TCI, or the beam type used for receiving the second downlink signal based on the second TCI comprises:
receiving media access control control element MAC CE signaling sent by the network device, wherein the MAC CE signaling indicates: the beam type used for receiving the first downlink signal based on the first TCI, or the beam type used for receiving the second downlink signal based on the second TCI; and
determining, by using the MAC CE signaling, the beam type used for receiving the first downlink signal based on the first TCI, or the beam type used for receiving the second downlink signal based on the second TCI.

28. The method according to claim 26, wherein determining the beam type used for receiving the first downlink signal based on the first TCI, or the beam type used for receiving the second downlink signal based on the second TCI comprises:
receiving first DCI sent by the network device, wherein the first DCI indicates the beam type used for receiving the first downlink signal based on the first TCI; or
receiving second DCI sent by the network device, wherein the second DCI indicates the beam type used for receiving the second downlink signal based on the second TCI; and
determining, based on the first DCI, the beam type used for receiving the first downlink signal based on the first TCI, or determining, by the terminal device based on the second DCI, the beam type used for receiving the second downlink signal based on the second TCI.

29. The method according to claim 26, wherein determining the beam type used for receiving the first downlink signal based on the first TCI, or the beam type used for receiving the second downlink signal based on the second TCI comprises:
determining, based on the first TCI configured by the network device, the beam type used for receiving the first downlink signal based on the first TCI; or
determining, based on the second TCI configured by the network device, the beam type used for receiving the second downlink signal based on the second TCI.

30. The method according to claim 26, wherein determining the beam type used for receiving the first downlink signal based on the first TCI, or the beam type used for receiving the second downlink signal based on the second TCI comprises:
receiving indication information from the network device, wherein the indication information indicates a reporting type of a reference signal, the reference signal comprises the first reference signal and/or the second reference signal, and the reporting type comprises a first reporting type and a second reporting type; and
the first reporting type indicates: the terminal device reports measurement results obtained when the first reference signal and the second reference signal can be simultaneously received, and/or reports an identifier of the first reference signal and an identifier of the second reference signal, and the second reporting type indicates: the terminal device reports a measurement result obtained when the first reference signal can be received and/or the identifier of the first reference signal, or reports a measurement result obtained when the second reference signal can be received and/or the identifier of the second reference signal; and
determining, based on the reporting type, the beam type used for receiving the first downlink signal based on the first TCI, or the beam type used for receiving the second downlink signal based on the second TCI.

31. The method according to claim 30, wherein the first reporting type comprises group-based reporting, and the second reporting type comprises non-group-based reporting.

32. The method according to any one of claims 26 to 31, wherein based on the beam type, receiving the first downlink signal based on the first TCI, or receiving the second downlink signal based on the second TCI comprises:
determining, based on the beam type, the first beam used for receiving the first downlink signal based on the first TCI, or determining the second beam used for receiving the second downlink signal based on the second TCI; and
receiving the first downlink signal by using the first beam, or receiving, by the terminal device, the second downlink signal by using the second beam.

33. The method according to any one of claims 26 to 32, wherein the method further comprises:
determining, based on the beam type, time for completing TCI switching by the terminal device after receiving the TCI switching instruction.

34. The method according to claim 33, wherein the method comprises:
when the beam type is the second beam type, determining whether a first target beam corresponding to a reference signal indicated by the first TCI is known, or determining whether a second target beam corresponding to a reference signal indicated by the second TCI is known; and
when the first target beam is unknown or the second target beam is unknown, after the TCI switching instruction is received, the time for completing TCI switching comprises measurement time for determining L1-reference signal received power RSRP by the terminal device.

35. The method according to claim 34, wherein determining whether the first target beam corresponding to the reference signal indicated by the first TCI is known, or determining whether the second target beam corresponding to the reference signal indicated by the second TCI is known comprises:
receiving the indication information from the network device, wherein the indication information indicates the reporting type of the reference signal, the reference signal comprises the first reference signal and the second reference signal, and the reporting type comprises the first reporting type or the second reporting type; and
when the indication information comprises the second reporting type of the first reference signal, determining that the first target beam corresponding to the first TCI is known; or
when the indication information comprises the second reporting type of the second reference signal, determining that the second target beam corresponding to the second TCI is known.

36. The method according to claim 35, wherein the first reporting type comprises group-based reporting, and the second reporting type comprises non-group-based reporting.

37. A communication apparatus, comprising a unit configured to perform each step of the method according to any one of claims 1 to 9, or a unit configured to perform each step of the method according to any one of claims 10 to 21, or a unit configured to perform each step of the method according to any one of claims 22 to 25, or a unit configured to perform each step of the method according to any one of claims 26 to 36.

38. A communication apparatus, wherein the apparatus comprises at least one processor, and the at least one processor is coupled to at least one memory; and
the at least one processor is configured to execute a computer program or instructions in the at least one memory, to enable the communication apparatus to perform the method according to any one of claims 1 to 9, or perform the method according to any one of claims 10 to 21, or perform the method according to any one of claims 22 to 25, or perform the method according to any one of claims 26 to 36.

39. A computer-readable storage medium, wherein the computer-readable storage medium stores a computer program or instructions, and when a computer reads and executes the computer program or the instructions, the computer is enabled to perform the method according to any one of claims 1 to 9, or perform the method according to any one of claims 10 to 21, or perform the method according to any one of claims 22 to 25, or perform the method according to any one of claims 26 to 36.

40. A chip, comprising a processor, configured to perform the method according to any one of claims 1 to 9, or perform the method according to any one of claims 10 to 21, or perform the method according to any one of claims 22 to 25, or perform the method according to any one of claims 26 to 36.
